(19) Europäisches Patentamt / European Patent Office / Office européen des brevets

(11) **EP 1 518 722 B1**

(12) **EUROPEAN PATENT SPECIFICATION**

(45) Date of publication and mention
of the grant of the patent:
**13.05.2009 Bulletin 2009/20**

(51) Int Cl.:
*B60G 17/015* (2006.01)  *B60G 17/08* (2006.01)

(21) Application number: **04022941.1**

(22) Date of filing: **27.09.2004**

(54) **Suspension control system and suspension control method for vehicle**

System und Verfahren zur Regelung einer Fahrzeugaufhängung

Système et procédé de commande d'une suspension de véhicule

(84) Designated Contracting States:
**AT BE BG CH CY CZ DE DK EE ES FI FR GB GR
HU IE IT LI LU MC NL PL PT RO SE SI SK TR**

(30) Priority: **26.09.2003 JP 2003336127
03.10.2003 JP 2003346000**

(43) Date of publication of application:
**30.03.2005 Bulletin 2005/13**

(60) Divisional application:
**04024056.6 / 1 541 389**

(73) Proprietor: **AISIN AW CO., LTD.
Anjo-shi, Aichi 444-1192 (JP)**

(72) Inventor: **Ogawa, Fumiharu
Okazaki-shi
Aichi 444-8564 (JP)**

(74) Representative: **Kramer - Barske - Schmidtchen
European Patent Attorneys
Landsberger Strasse 300
80687 München (DE)**

(56) References cited:
**EP-A- 0 910 057        EP-A- 1 288 887
DE-A1- 10 060 536        DE-A1- 10 164 481
DE-A1- 19 600 734        US-A- 5 315 295
US-A- 5 369 584        US-A- 6 009 374**

**Description**

BACKGROUND OF THE INVENTION

1. Field of the Invention

The present invention relates to a suspension control system and to a suspension control method for a vehicle.

2. Description of the Related Art

JP-A-9-114367 discloses a suspension control system in which the suspension is adjusted in advance, for example, just before the vehicle starts to turn a corner in traveling a predetermined route, on the basis of the speed of the vehicle and corner information obtained from a navigation device within the vehicle.

However, in the suspension control system of JP-A-9-114367, the corner information obtained from the navigation device includes no information relative to the state of the road surface at the corner. Accordingly, for example, when the road surface at the corner is irregular and/or slippery, steering during travel of the vehicle around the corner may become unstable and the driver may feel riding discomfort (an unpleasant sensation).

SUMMARY OF THE INVENTION

Therefore, in order to overcome the above problem, an object of the present invention is to provide a suspension control system and a suspension control method for a vehicle in which the operation of a suspension means in running the vehicle is controlled by also taking into consideration the state of the road surface traveled by the vehicle, in addition to the information relative to the corner from the navigation device when the vehicle approaches the corner.

Appended claim 1 is directed towards a suspension control system providing a solution for the object of the invention.

Appended claim 8 is directed towards a suspension control method providing a solution for the object of the invention.

Appended sub-claims are directed towards advantageous embodiments of their respective independent claims.

When the vehicle approaches the corner, with the inventive suspension control system an adjustment value corresponding to a desirable damping force of the suspension means is calculated on the basis of the detected vehicle speed, the detected road surface condition and the information relative to the corner from the navigation device. The adjustment value is output to the suspension means so as to control the damping force of the suspension means by the adjustment value.

Accordingly, a good ride sensation (riding comfort of the passengers) and good steering stability during the running of the vehicle can be maintained even when there are irregularities in the road surface approaching and/or in the corner.

BRIEF DESCRIPTION OF THE DRAWINGS

Fig. 1     is a block diagram of a first embodiment of a suspension control system for an automobile in accordance with the present invention.
Fig. 2     is a schematic view showing arrangement of suspension devices in the automobile.
Fig. 3     is an enlarged side view of one suspension device of Fig. 2.
Fig. 4     is a schematic view of a circuit of the suspension device.
Fig. 5     is a flow chart of a navigation control program executed by a computer of the navigation device of Fig. 1.
Fig. 6     is a detailed flow chart of the basic navigation routine (step 100 in Fig. 5).
Fig. 7     is a flow chart of the running environment recognition routine (step 110 in Fig. 5).
Fig. 8     is a flow chart of a suspension control program executed by the microprocessor of the electronic controller in Fig. 1.
Fig. 9     is a flowchart of the degree of irregularity setting routine (step 130 in Fig. 8).
Fig. 10    is a flow chart of the damping level determination routine (step 140 in Fig. 8).
Fig. 11    is a schematic view of a road including a curve starting point.
Fig. 12    is a graph of the relationship between damping level Cn and an estimated transverse acceleration G, as shown by a degree of irregularity P=Hi in the first embodiment.

Fig. 13    is a graph of the damping level Cn versus the estimated transverse acceleration G, as shown by a degree of irregularity P=Mi in the first embodiment.

Fig. 14    is a graph of the damping level Cn versus the estimated transverse acceleration G, as shown by a degree of irregularity P=Lo in the first embodiment.

Fig. 15    is a graph showing the relationship between the diaphragm aperture 3 of an electromagnetic diaphragm valve and the damping level Cn.

Fig. 16    is a block diagram of a second embodiment of the present invention.

Fig. 17    is a flow chart of a suspension control program executed by a microprocessor of the electronic controller in Fig. 16.

Fig. 18    is a flow chart of the degree of slip setting routine (step 130a in Fig. 17).

Fig. 19    is a flow chart of the damping level determination routine (step 140a in Fig. 17).

Fig. 20    is a graph showing the relationship between the damping level Cn and the estimated transverse acceleration G for a degree of slip SP=Hi in the second embodiment.

Fig. 21    is a graph of the damping level Cn versus the estimated transverse acceleration G for a degree of slip SP=Mi in the second embodiment.

Fig. 22    is a graph of the damping level Cn versus the estimated transverse acceleration G for a degree of slip SP=Lo in the second embodiment.

Fig. 23    is a graph of detected acceleration G versus time, showing frequency f and the acceleration component G'.

Fig. 24    is a flowchart of a further damping level determination routine (step 140 in Fig.8).

Fig. 25    is a continuation of the routine of Fig. 24.

Fig. 26    is a flowchart of another damping level determination routine of Fig. 17 and

Fig. 27    is a continuation of the routine of Fig. 26.

## DESCRIPTION OF THE PREFERRED EMBODIMENTS

Preferred embodiments of the present invention will next be explained with reference to the drawings.

First embodiment

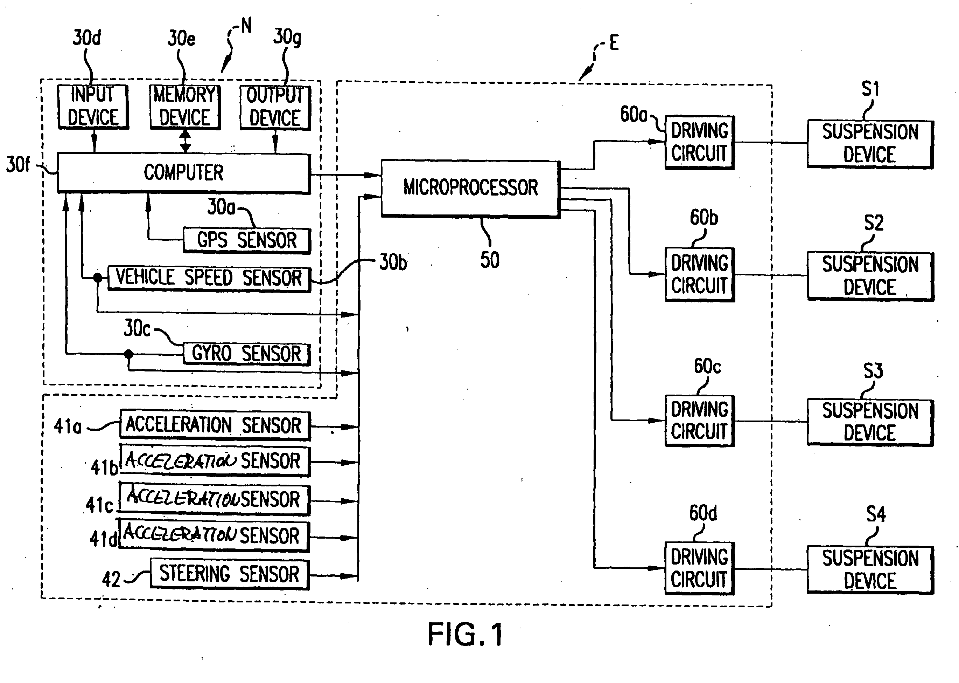

Fig. 1 shows a first embodiment of a suspension control system of the present invention, designed for a sedan type automobile and including suspension devices S 1 to S4 and an electronic controller E.

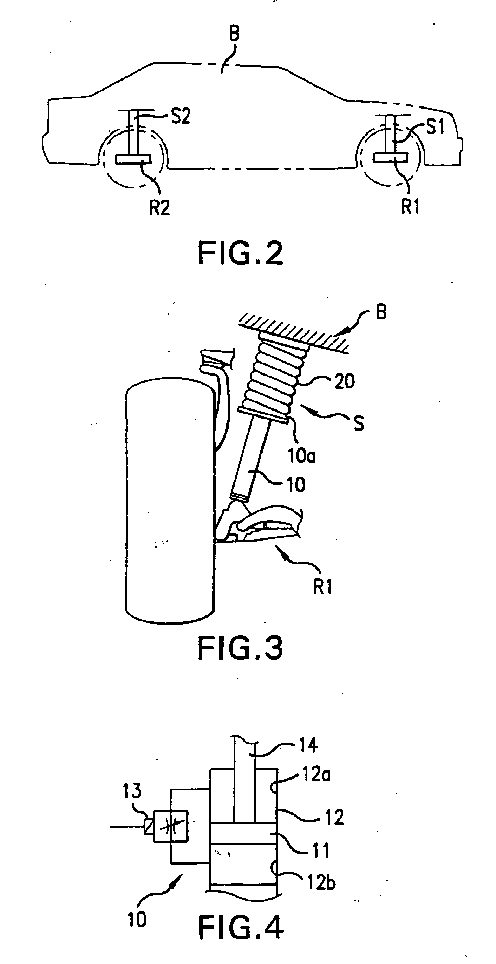

As shown in Fig. 2, the suspension device S1 is interposed and mounted between a wheel support element R1 supporting the right-hand side front wheel of the automobile, and the right-hand side front portion of the vehicle frame B.

As shown in Fig. 3, this suspension device S1 has a damper 10 and a coil spring 20. The lower end portion of damper 10 is supported on-the wheel support element. The wheel support element, to which the lower end of the shock absorber attaches, may be different for front and rear wheels and for different vehicles, e.g., axle housing, lower suspension arm, steering knuckle, bearing housing or motor housing. The coil spring 20 is coaxially mounted on the damper 10, external thereto, between a flange 10a arranged in an axially intermediate location on the damper 10 and the vehicle frame B. Thus, the coil spring 20 biases upward the front right-hand side of the vehicle frame B.

The construction and function of the damper 10 is illustrated by the equivalent circuit shown in Fig. 4 which shows the damper 10 as including a piston 11 and a hydraulic cylinder 12. The piston 11 is slidably fitted and mounted within the cylinder 12, and partitions the interior of the cylinder 12 into upper and lower hydraulic compartments 12a, 12b.

Further, the damper 10 has an electromagnetic diaphragm valve 13 which provides communication between hydraulic compartments 12a and 12b through its diaphragm aperture. A piston rod 14 extends from the piston 11 through the hydraulic compartment 12a and its upper end is connected to the vehicle body B at the right-hand side front wheel corresponding part.

As the piston 11 slides upward within the damper 10, operating oil within the hydraulic compartment 12a flows into the hydraulic compartment 12b through the electromagnetic diaphragm valve 13. Likewise, as the piston 11 slides downward, the operating oil within the hydraulic compartment 12b flows into the hydraulic compartment 12a through the electromagnetic diaphragm valve 13. In this embodiment, the electromagnetic diaphragm valve 13 adjusts the amount of flow of the operating oil between the hydraulic compartments 12a and 12b, in accordance with its diaphragm aperture which is reduced (or increased) in accordance with an increase (or decrease) corresponding to the damping force of the damper 10, i.e., the damping force of the suspension device S1.

Likewise, the suspension device S2 is interposed and mounted between a wheel support element R2, arranged near the right-hand side rear wheel of the automobile, and the corresponding part (hereinafter also called the right-hand side rear wheel corresponding part) of the vehicle frame B. The suspension device S3 (see Fig. 1) is interposed and mounted between an unillustrated wheel support element, supporting the left-hand side front wheel of the automobile and the corresponding part of the vehicle frame B. Further, the suspension device S4 (see Fig. 1) is interposed and mounted between an unillustrated wheel support element supporting the left-hand side rear wheel of the automobile and the corresponding part of the vehicle frame B.

Similar to the suspension device S1, each of these suspension devices S2 to S4 has a damper 10 and coil spring 20 and each functions in a manner similar to suspension device S1.

The front wheels of the automobile serve as the drive wheels.

The electronic controller E will next be explained in relation to navigation device N with reference to Fig. 1. The navigation device N includes a GPS sensor 30a, a vehicle speed sensor 30b and a gyro sensor 30c. The GPS sensor 30a detects the present position of the automobile on the basis of respective radio signals from plural geostationary satellites. The vehicle speed sensor 30b detects the running speed of the automobile as a vehicle speed. The gyro sensor 30c detects an angle of rotation of the automobile around a vertical axis passing through the center of gravity of the automobile.

Further, the navigation device N has an input device 30d, a memory device 30e, a computer 30f and an output device 30g. The input device 30d is used to input necessary information to the computer 30f. A series of map data is stored to the memory device 30e as a database so as to be read by the computer 30f.

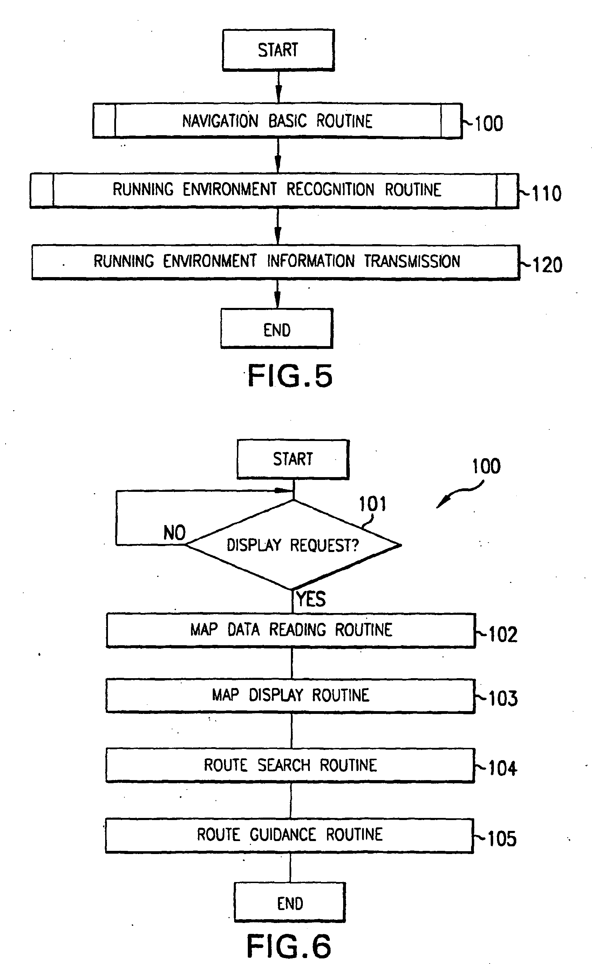

The computer 30f executes a navigation control program in accordance with the flow charts shown in Figs. 5 to 7. The computer 30f executes routines required for guidance of the automobile (navigation control program) on the basis of the input from the input device 30d, the data stored in the memory device 30e and each of the outputs of the GPS sensor 30a and the vehicle speed sensor 30b. The output device 30g displays data required as information in the automobile, under control of the computer 30f.

As shown in Fig. 1, the electronic controller E has respective acceleration sensors 41a to 41d, a steering sensor 42, a microprocessor 50 and respective driving circuits 60a to 60d.

Each of the acceleration sensors 41 a to 41d is arranged in the vehicle body B adjacent respective suspension devices S1 to S4. Each of these acceleration sensors 41 a to 41 d detects vertical acceleration of the automobile. The steering sensor 42 detects a steering angle relative to a neutral position of the steering wheel of the automobile.

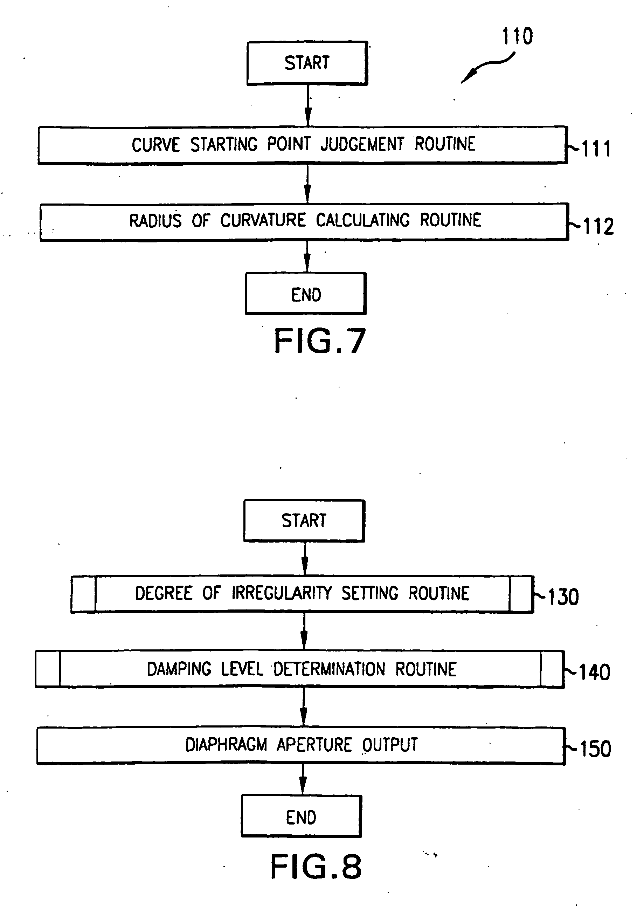

The microprocessor 50 executes a suspension control program in accordance with the respective flow charts shown in Figs. 8 to 10 to adjust the damping force of each of the suspension devices S1 to S4 on the basis of the output of the computer 30f of the navigation device N, and the outputs of the vehicle speed sensor 30b, the gyro sensor 41e, the respective acceleration sensors 41a to 41d and the steering sensor 42.

The respective driving circuits 60a to 60d operate the electromagnetic diaphragm valves 13 of the respective suspension devices S1 to S4 under control of the microprocessor 50.

In this first embodiment, when the computer 30f of the navigation device N starts the execution of the navigation control program in accordance with the flow chart of Fig. 5, basic guidance is provided by the navigation device N by execution of a basic navigation routine 100 (see Fig. 6).

First, if request for display of a map is made by operation of the input device 30d, the judgement is YES in step 101 of Fig. 6. Next, in step 102, map data for the requested map is read from the memory device 30e. Thereafter, in step 103, a routine for display of the requested map is executed, whereby the output device 30g displays the requested map on the basis of the road map data.

Next, a route search is executed in step 104 on the basis of the outputs of the GPS sensor 30a and the gyro sensor 41e and an input destination (input using the input device 30d). In step 105, route guidance is provided on the basis of the results of the route search. In accordance with this guidance processing, the automobile driver is assisted in following the route determined by the route search.

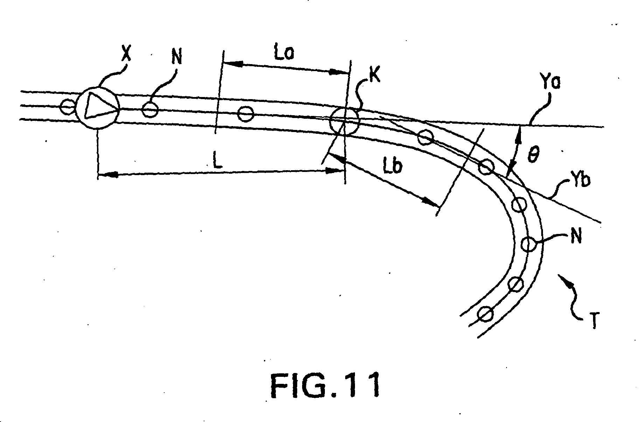

When the execution of the basic navigation routine 100 is completed, a travel environment recognition routine 110 (see Figs. 5 and 7) is executed as follows. First, as shown in Fig. 11, it is assumed that plural nodes N show a curve around a corner T. One of these nodes shows a starting point K of the curve as a transition from a road extending in a straight line in the direction of advance of the automobile. The nodes N, included in the road map data, serve as positions for calculating a radius of curvature Ra for the corner T.

The curve starting point K is judged as follows in step 111 of Fig. 7. First, as shown in Fig. 11, the angle formed by straight lines Ya and Yb is calculated as a turning angle 2 at each of the nodes N in advance of the automobile. Here, the straight line Ya is a straight line passing through a pair of nodes adjacent to and preceding and following a point a predetermined distance La backward from an object node K. Further, the straight line Yb is a straight line passing through nodes adjacent to and preceding and following a position a predetermined distance Lb forward from the object node K.

When the turning angle 2 is calculated for every node N as mentioned above, the first node for which the calculated turning angle 2 is greater than a predetermined angle is judged to be the curve starting point K.

Next, in step 112, the radius of curvature Ra of the corner T is calculated for every node N as the radius of a circle passing through nodes at three points in total, including nodes at two points located before and after a node N at the corner T. Here, a minimum value among the radii of curvature calculated in this way is set as radius of curvature Ra of the corner.

When step 112 is completed, a running environment information transmission routine is executed (step 120 in Fig. 5). In this routine, information relative to the curve starting point K determined in the running environment recognition routine 110 and the radius of curvature Ra of the corner T are output to the electronic controller E.

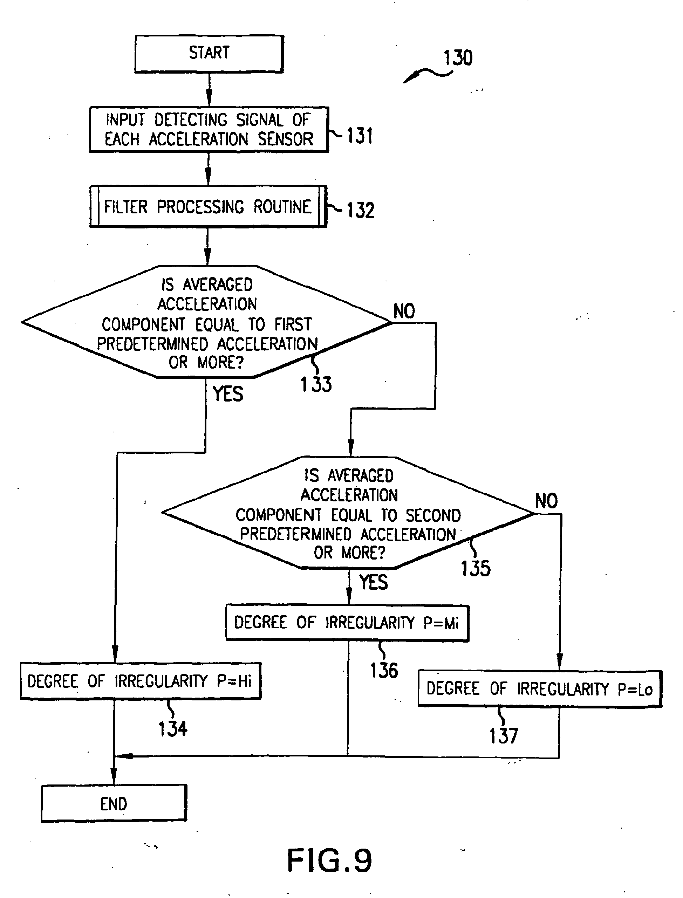

In execution of the degree of irregularity setting routine 130 (see Fig. 9) by the microprocessor 50 of the electronic controller E, in the first routine in the suspension control program shown in Fig. 8, an acceleration signal from each of the acceleration sensors 4 1 a to 4 1 d is input to the microprocessor 50 in a step 131.

The filter processing routine 132 involves sampling of the acceleration signal of each of the acceleration sensors 41a to 41 d input in the step 131, and extraction of an acceleration component G' at a predetermined frequency and its averaging, which are performed as follows.

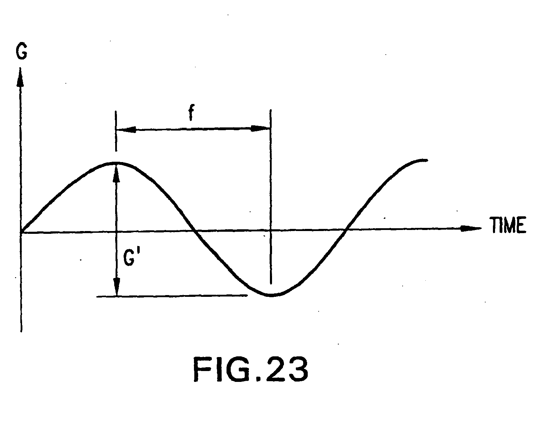

Namely, in the sampling, the acceleration signal G of each of the acceleration sensors 4 1 a to 41d is sequentially sampled with the passage of time, e.g., every tenth acceleration signal from each of the acceleration sensors 41a-41d as shown in Fig. 23. On the basis of the data sampled in this way, the acceleration component G' corresponding to a predetermined frequency within the range of 10 (Hz) to 20 (Hz) is sequentially extracted from the sampling data for each of the acceleration sensors 41a-41d. All the acceleration components extracted in this way are then averaged to obtain an average acceleration component as the arithmetic mean.

In this embodiment, the above acceleration component determined at a frequency within the range of 10 (Hz) to 20 (Hz) because such a frequency corresponds to irregularity of a road surface which is irregular approximately to the extent of that creating discomfort for a passenger. The averaged acceleration component is a component common to the respective suspension devices S1 to S4 of the automobile.

Next, it is judged in step 133 whether or not the above averaged acceleration component is equal to or greater than a first predetermined acceleration. Here, this first predetermined acceleration corresponds to that from a road surface having a worst case irregularity. In this embodiment, the first predetermined acceleration is set to, e.g., 2.0 G.

When the averaged acceleration component is greater than the first predetermined acceleration, the judgement in step 133 is YES and the degree of irregularity P=Hi is set in step 134. Here, the degree of irregularity P represents the degree of irregularity of the road surface traveled by the automobile, and a degree of irregularity P=Hi indicates that the road surface traveled by the automobile is a worst case degree of irregularity.

When the judgment in step 133 is NO, it is then determined in step 135 whether or not the averaged acceleration component is equal to or greater than a second predetermined acceleration. Here, this second predetermined acceleration corresponds to a state less irregular than the worst case irregularity corresponding to the first predetermined acceleration, and is set to e.g., 1.0 G in this embodiment.

When the averaged acceleration component is equal to or greater than the second predetermined acceleration, the judgement in step 135 is YES. Next, a degree of irregularity P=Mi is set in step 136. Here, degree of irregularity P=Mi indicates that the degree of irregularity of the road surface traveled by the automobile is a degree gentler than the worst case degree of irregularity corresponding to P=Hi.

When the judgment in step 135 is NO, a degree of irregularity P=Lo is set in step 137. Here, the degree of irregularity P=Lo indicates that the degree of irregularity of the road surface traveled by the automobile is the gentlest degree, e.g., approximately corresponding to a flat road surface. Further, steering instability and riding discomfort are stepwise less with changing of the degree of irregularity P to P=Hi, P=Mi and P=Lo.

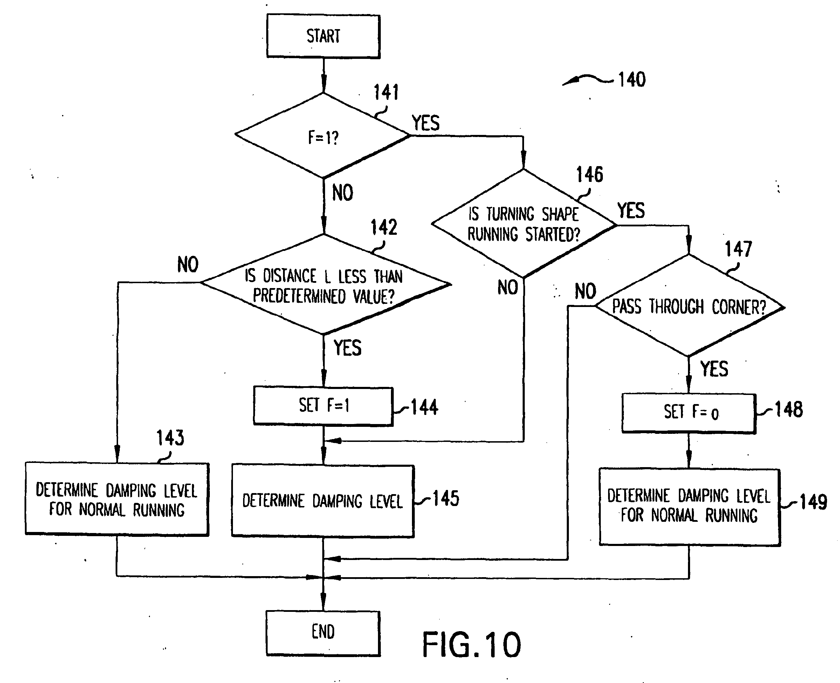

When the degree of irregularity setting routine 130 is finished, a damping level determination routine 140 (see Figs. 8 and 10) is next executed. In execution of this damping level determination routine 140, it is judged in step 141 whether or not a flag F is F=1. Here, F=1 shows that the automobile is in running under corner control. F=0 shows that the automobile is not in the course of execution of the corner control program.

If the flag F is F=0 in step 141, the corner control program is not being executed so that the judgment is NO. In the next step 142, the present position X of the automobile is detected on the basis of the output of the GPS sensor 30a from the computer 30f of the navigation device N. The distance L from this detected present position X of the automobile to the curve starting point K is then calculated. It is then judged whether or not this calculated distance L is less than a predetermined distance. When the distance L is not less than this predetermined distance, the judgement is NO in step 142.

Thereafter, a damping level Cn is determined as Cn=2 as a damping level for normal running of the automobile in step 143. Here, the damping level Cn is a level common for the diaphragm aperture (corresponding to an adjusting amount) of each electromagnetic diaphragm valve 13, i.e., a level corresponding to a common damping force for each of the suspension devices S1 to S4.

When the judgment in step 142 is YES, the flag F is set to F=1 in step 144 since the distance L is determined to be less than the predetermined distance. After step 144, determination of the damping level Cn common for the diaphragm aperture of each electromagnetic diaphragm valve 13 (corresponding to the damping force of each of the suspension devices S1 to S4) is performed as follows in step 145.

First, an estimated transverse acceleration G is calculated on the basis of the vehicle speed V of the automobile and the radius of curvature Ra of the corner T by using the following formula I. The estimated transverse acceleration G is an estimated transverse acceleration applied to the automobile in travel of the automobile in a turn around the corner T.

Estimated transverse acceleration:

$$\text{I. } G = \{(V x Vr)2\}/Ra$$

wherein Vr is a deceleration correction coefficient. This deceleration correction coefficient Vr is a correction coefficient for estimating and correcting the deceleration from the vehicle speed V in the present position X of the automobile to the vehicle speed during travel of the automobile around the corner. In this embodiment, for example, Vr=0.8 to 0.9 is set.

The above formula I is stored in a ROM of the microprocessor 50 in advance.

The damping level Cn is determined as follows by using the estimated transverse G and the above degree of irregularity P, on the basis of map shape data given in the following Table 1.

Table 1

| Degree of irregularity estimated transverse G | P=Hi | P=Mi | P=Lo |
|---|---|---|---|
| G3<G | Cn=5 | Cn=6 | Cn=7 |
| G2<G≤G3 | Cn=4 | Cn=5 | Cn=6 |
| G1<G≤G2 | Cn=3 | Cn=4 | Cn=5 |
| G≤G1 | Cn=2 | Cn=3 | Cn=4 |

In the map shape data of the above Table 1, the damping level Cn represents the relationship between the degree of irregularity P and the estimated transverse acceleration G. In this case, the estimated transverse acceleration G is set so as to be increased in the order of G=G1, G=G2 and G=G3.

When the degree of irregularity P=Hi is set as mentioned above and the estimated transverse acceleration G is greater than G1 and is G2 or less, the damping level is determined to be Cn=3 on the basis of the data of Table 1. Further, when the degree of irregularity P=Mi is set and the estimated transverse acceleration G is greater than G1 and is G2 or less, the damping level is determined to be Cn=4 on the basis of the data of Table 1. Further, when the degree of irregularity P=Lo is set and the estimated transverse acceleration G is greater than G1 and is G2 or less, the damping level is determined to be Cn=5 on the basis of the data of Table 1.

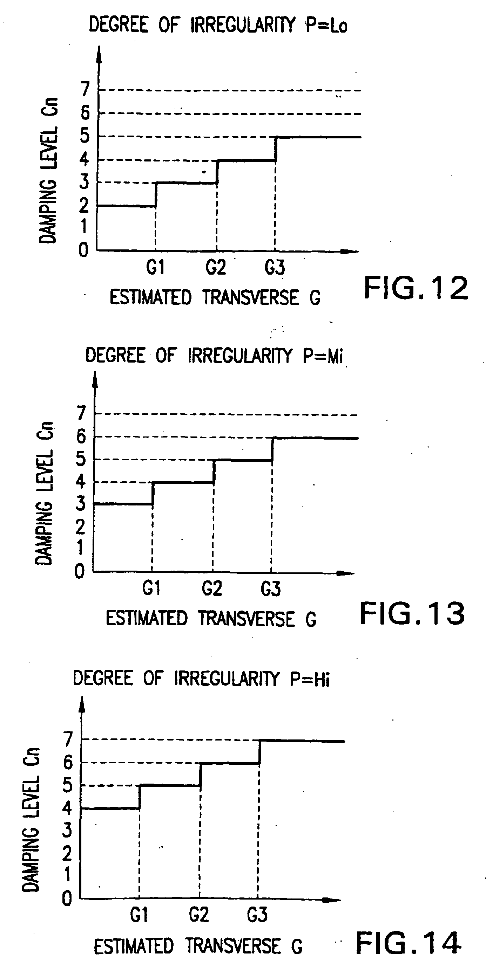

The relationship between the damping level Cn, the estimated transverse acceleration G and the degree of irregularity P in the data of Table 1 will now be explained with reference to Figs. 12 to 14. In the relationship between the damping level Cn and the estimated transverse acceleration G, as shown by Figs. 12 to 14, the damping level Cn is increased as the estimated transverse acceleration G increases. The estimated transverse acceleration G is increased as the vehicle speed of the automobile during running of the corner is increased or the radius of curvature Ra of the corner is less.

Conversely, in the relationship between the damping level Cn and the degree of irregularity P, as shown in Figs. 12 to 14, the damping level Cn is reduced as the degree of irregularity P becomes worse in the order of P=Lo, P=Mi and P=Hi. Namely, as the averaged acceleration component increases, the degree of irregularity becomes worse and the damping level Cn is reduced.

If the flag F is F=1, when the execution of the damping level determination routine 140 has proceeded to step 141 as mentioned above, the corner control is in effect so that the judgment is YES. Next, when the output of the steering sensor 42 indicates approximately the neutral position, the automobile has not started turning the corner. Accordingly, the judgement is NO in step 146. In accordance with this judgment, similar to the above case, the determination of the damping level Cn common to the diaphragm aperture of each electromagnetic diaphragm valve 13 is made in step 145.

However, when the automobile is found to have started turning the corner in step 146, the judgement is YES, based on the output of the steering sensor 42. Next, it is judged in step 147 whether or not the automobile has passed through the corner T, i.e., completed the turn. At the present stage, just after the judgement YES in step 146, the judgement is NO in step 147, on the basis of the output of the gyro sensor 41e from the computer 30f.

In accordance with this judgment, the suspension control program proceeds to complete the damping level determination routine 140 without making a new determination of the damping level Cn in step 145. This means that the damping level Cn already determined in step 145 is held, in consideration of the degree of irregularity of the road surface just before the automobile enters the turn. This holding of the damping level Cn is maintained and the judgement becomes YES in step 147.

Thereafter, when the judgement is YES in step 147 on the basis of the output of the gyro sensor 41e from the computer 30f indicating that the automobile has completed turning the corner T in step 147, F=0 is set in step 148. Next, similar to step 143, the damping level Cn is determined as Cn=2 as a damping level for the normal running of the automobile in step 149.

When the damping level determination routine 140 (see Figs. 8 and 10) is terminated, the diaphragm aperture of each electromagnetic diaphragm valve 13 of the respective suspension devices S1 to S4 is determined as follows in the next step 150 (see Fig. 8) in accordance with the result in one of the above steps 143, 145, 147 and 149.

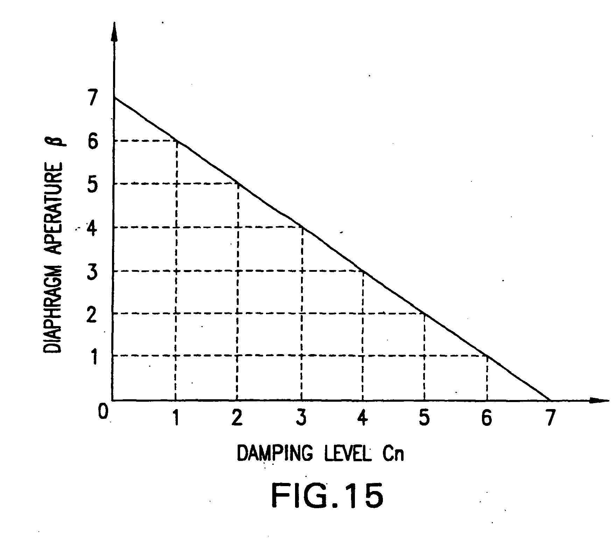

When the damping level Cn is determined as Cn=2 in step 143, the diaphragm aperture β for the electromagnetic diaphragm valve 13 of each of the suspension devices S1 to S4 is determined as β=5 on the basis of the damping level Cn=2 from the graph of the relationship between the diaphragm aperture β and the damping level Cn (β-Cn characteristics) shown in Fig. 15. In this embodiment, as shown in Fig. 15, the diaphragm aperture β is set so as to be increased (or decreased) in accordance with a reduction (or increase) in the damping level Cn.

When the diaphragm aperture β is determined as β=5, the diaphragm aperture β is output to respective driving circuits 60a to 60d as data showing β=5 in step 150. Thus, each of the driving circuits 60a to 60d operates an electromagnetic diaphragm valve 13 on the basis of this output data. This operation is performed such that all the diaphragm apertures of the respective electromagnetic diaphragm valves 13 are adjusted to the diaphragm aperture β=5.

When the diaphragm aperture is adjusted in this way, each electromagnetic diaphragm valve 13 greatly increases the flow of operating oil between the hydraulic compartments 12a and 12b and greatly reduces the resistance to circulation of the operating oil, since the diaphragm apertures β have been enlarged to β=5 as mentioned above. Thus, the damping force of each of the suspension devices S1 to S4 is controlled so as to be reduced during straight running of the automobile just before the entry into the turn around the corner T, and riding comfort (ride sensation) during travel along the straight road can be optimized, irrespective of the degree of irregularity of the road surface.

When the damping level Cn is determined in step 145 after the judgement YES in step 142, the diaphragm aperture β is determined as follows from the β-Cn characteristics shown in Fig. 15 on the basis of the damping level Cn in step 150.

For example, when the degree of irregularity (see step 134 in Fig. 9) is set as P=Hi and the damping level is determined as Cn=3, since the estimated transverse G is greater than G1 and is G2 or less, the diaphragm aperture β of each electromagnetic diaphragm valve 13 is determined as β=4 on the basis of the damping level Cn=3 from the β-Cn graph shown in Fig. 15. Such a determination corresponds to that for a road surface having the worst case degree of irregularity.

When the degree of irregularity is judged to be P=Lo (see step 137 in Fig. 9) and the damping level is determined as Cn=6, since the estimated transverse G is greater than G2 and is G3 or less, the diaphragm aperture β for each electromagnetic diaphragm valve 13 is determined as β=1 on the basis of the damping level Cn=6 from the β-Cn graph shown in Fig. 15. Such a determination corresponds to that for the lowest degree of irregularity of the road surface.

Next, the diaphragm aperture β (e.g., β=4 or 1) determined in this way is output to each of the driving circuits 60a to 60d in step 150 and each of the suspension devices S1 to S4 is controlled responsive to this output.

For example, when the diaphragm aperture β which is output to each of the driving circuits 60a to 60d is β=4 (step 150), the driving circuits 60a to 60d adjust the diaphragm apertures β of the respective electromagnetic diaphragm valves 13 to β=4. This adjustment of the electromagnetic diaphragm valves 13 to β=4 greatly increases the amount of flow of the operating oil between the hydraulic compartments 12a and 12b, and greatly reduces resistance to circulation of the operating oil. Thus, the respective electromagnetic diaphragm valves 13 greatly reduce the damping forces of the suspension devices S1 to S4.

On the other hand, when the diaphragm aperture data for β=1 is output to each of the driving circuits 60a to 60d (step 150), the respective driving circuits 60a to 60d adjust the diaphragm apertures β of the electromagnetic diaphragm valves 13 to β=1. When the diaphragm aperture β is adjusted to β=1, each electromagnetic diaphragm valve 13 greatly decreases the amount of flow of the operating oil between the hydraulic compartments 12a and 12b by increasing the resistance to circulation of the operating oil. Thus, each electromagnetic diaphragm valve 13 greatly increases the damping force of the respective suspension devices S1 to S4.

The damping force of each of the suspension devices S1 to S4 is controlled by also taking into consideration the degree of irregularity of the road surface in straight travel of the automobile before entering the curve at starting point K, i.e., just before initiation of the corner control by controlling the damping force as described above. For example, when the diaphragm aperture is determined as β=4, the road surface has the worst degree of irregularity. Therefore, the damping force of each of the suspension devices S1 to S4 is controlled so as to be greatly reduced just before the entry of the automobile into the turn around corner T. Accordingly, it is possible to set the ride sensation for straight travel just before the entry of the automobile into the curve, even though the road surface has the worst degree of irregularity.

The diaphragm aperture is determined as β=1 for the lowest degree of irregularity. Accordingly, the damping force of each of the suspension devices S1 to S4 is set higher. Thus, steering stability in turning the corner T can be set as preferred.

Further, when the damping level Cn is determined in step 145 after a NO determination in step 146, execution of the corner control is started. Thereafter, in straight travel, up to just before entry of the automobile into the turn at corner T, the damping force of each of the suspension devices S1 to S4 is controlled in a manner similar to the case in which the damping force is controlled by adjusting the diaphragm aperture β in step 150, after the determination YES in step 142.

Further, when the judgement is NO in step 147 after a YES determination in step 146, the damping level Cn already determined in step 145, just before the YES determination in step 146 is maintained. This means that the damping force of each of the suspension devices S1 to S4 is controlled taking into consideration the degree of irregularity of the road surface just before the entry of the automobile into the curve around corner T and set in advance to be held and utilized as the damping force after entry of the automobile into the curve around corner T. Accordingly, when the automobile enters into the turn (curve) around corner T, the operations of the respective suspension devices S1 to S4 are estimated and controlled so as to maintain the damping force already set in advance just before entry of the automobile into the turn around the corner T. As a result, the steering stability and the ride sensation during travel of the automobile in turning the corner T can be preferably maintained even when there are irregularities in the road surface around the corner T.

Further, when the damping level Cn is determined as Cn=2 in step 149 after a judgement YES in step 147, the diaphragm aperture β of each electromagnetic diaphragm valve 13 is set to β=5, by application of the damping level Cn=2 to the graph of Fig. 15.

When the diaphragm aperture β is set to be β=5, data for the diaphragm aperture β=5 is output to each of the driving circuits 60a to 60d in step 150. Thus, the respective driving circuits 60a to 60d operate the respective electromagnetic diaphragm valves 13 on the basis of this output data. When the diaphragm aperture is enlarged to β=5 in this way, each electromagnetic diaphragm valve 13 greatly increases the flow of the operating oil between the hydraulic compartments 12a and 12b by reducing resistance to circulation of the operating oil. Thus, in straight line travel of the automobile after passage around the corner, the damping force of each of the suspension devices S1 to S4 is reduced to provide a comfortable ride in straight line travel.

Second embodiment

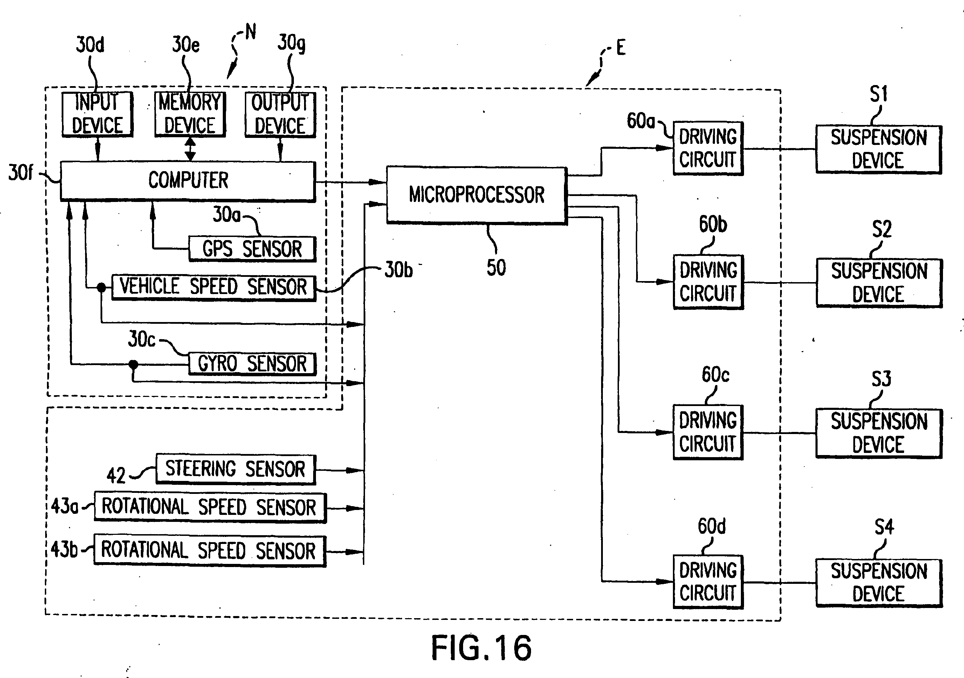

Fig. 16 shows a second embodiment of the present invention in which rotational speed sensors 43a, 43b are used instead of the acceleration sensors 41a to 41d in the electronic controller E of the above first embodiment. Each of these rotational speed sensors 43a, 43b is arranged near a drive wheel of an axle of the automobile. Each of these rotational speed sensors 43a, 43b detects the rotational speed of a drive wheel.

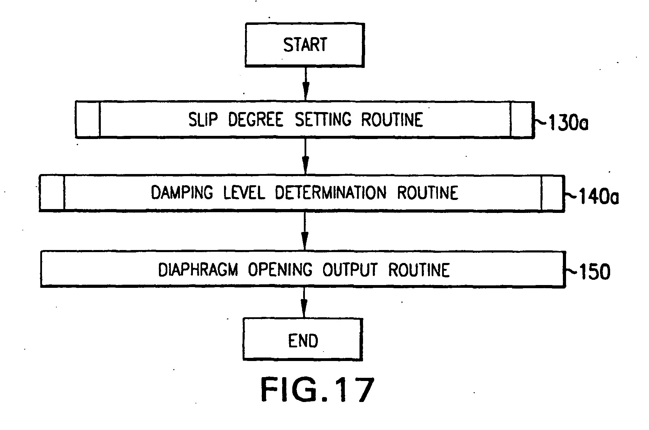

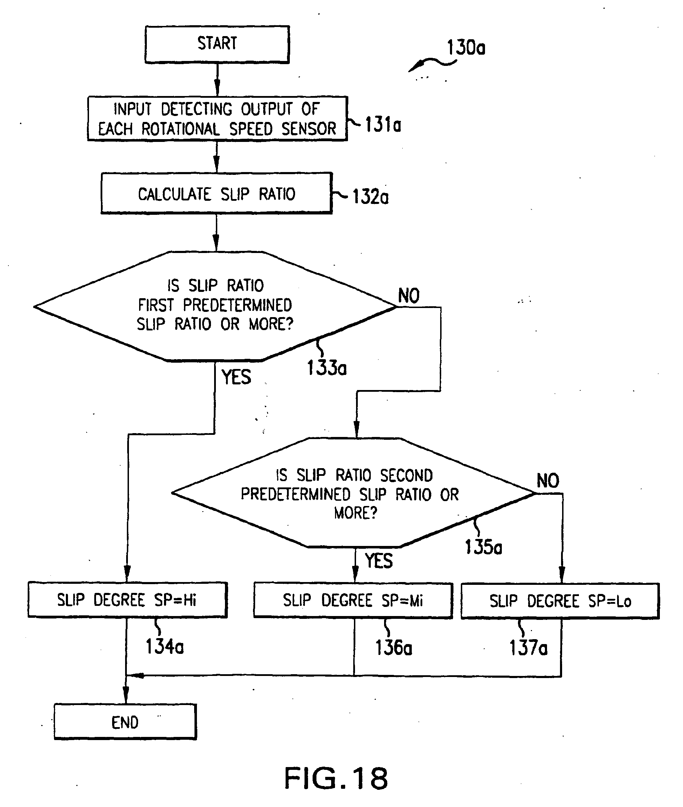

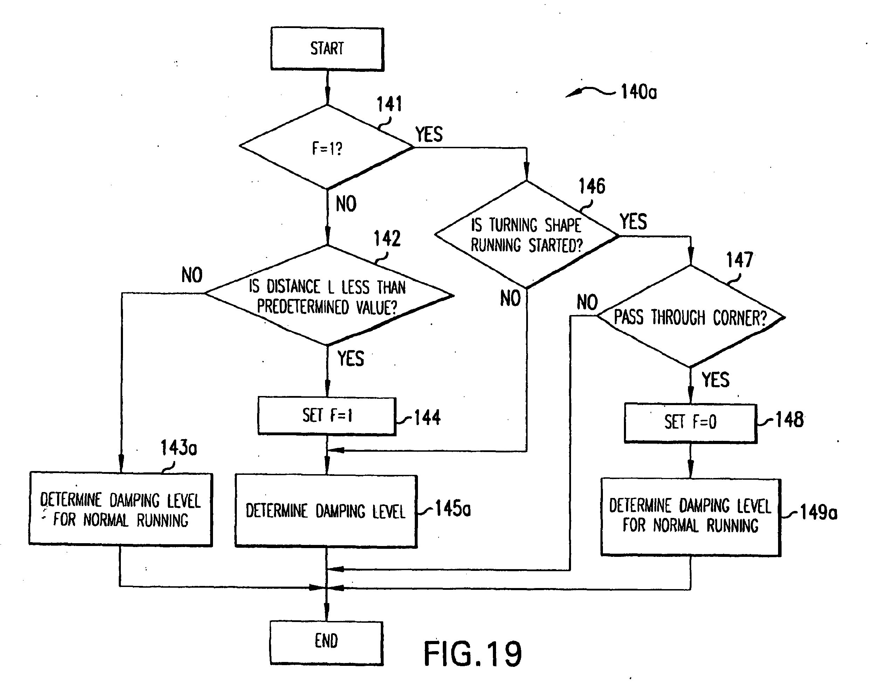

Further, this second embodiment is operated in accordance with the flow chart of Fig. 17, instead of the flow chart of Fig. 8 as in the first embodiment. Further, this second embodiment employs the slip degree setting routine 130a of Fig. 18 and the damping level determination routine 140a of Fig. 19, instead of the degree of irregularity setting routine 130 of Fig. 9 and the damping level determination routine 140 of Fig. 10 in the suspension control program of the first embodiment. Other features are similar to those of the first embodiment.

In this second embodiment, similar to the processing in the first embodiment, the microprocessor 50 of the electronic controller E begins to execute the above suspension control program in accordance with the flow chart of Fig. 17 when execution of the navigation basic routine 100 of Fig. 5 through step 120 has been terminated.

However, when the suspension control program proceeds to the slip degree setting routine 130a (see Fig. 18), signals from the respective rotational speed sensors 43a, 43b are input to the microprocessor 50 in step 131a. Thus, the microprocessor 50 calculates an average value (hereinafter referred to as average rotational speed a) of the rotational speeds of the respective drive wheels on the basis of these signals.

Next, in step 132a, a slip ratio is calculated in a manner which differs depending on whether the automobile is in a driving state or in a braking state. Here, "driving state" means that the automobile is traveling with positive acceleration in its direction of advance. In contrast "braking state" means that the automobile is running with negative acceleration with respect to its direction of advance.

When the automobile is in the driving state, the slip ratio is calculated on the basis of the average rotational speed a and the vehicle speed V of the automobile by using the following formula II:

$$\text{II. Slip ratio} = \{(B \times D \times a) - V\}/(B \times D \times a)$$

wherein, B is the ratio of the circumference of a circle to its diameter and D is the diameter of the drive wheel.

Further, when the automobile is in the braking state, the slip ratio is calculated on the basis of the above average rotational speed a and the vehicle speed V of the automobile by using the following formula III:

## III.    Slip ratio = {V-(BxDxa)}/V

The above formulas II and III are stored in the ROM of the microprocessor 50 in advance.

After step 132a, a judgement is made in step 133a whether or not the slip ratio calculated in the step 132a is equal to or greater than a first predetermined slip ratio. Here, this first predetermined slip ratio corresponds to that for a road surface having a worst case slip state. In this embodiment, the first predetermined slip ratio is set to, e.g., 40%.

When the calculated current slip ratio is equal to or greater than the first predetermined slip ratio, the result is YES in step 133a. Next, a slip degree SP=Hi is set in step 134a. Here, the slip degree SP shows the degree of slip on the road surface as currently traveled by the automobile. The slip degree SP=Hi shows that the road surface has a worst case degree of slip.

In contrast, when the judgment in step 133a is NO, in step 135a a determination is made as to whether or not the slip ratio is equal to or greater than a second predetermined slip ratio. This second predetermined slip ratio corresponds to an un-slippery state as compared with the worst case slip state represented by the first predetermined slip ratio. In this embodiment, the second predetermined slip ratio is set to, e.g., 20%.

When the slip ratio is equal to or greater than the second predetermined slip ratio, the determination is YES in step 135a. Next, a slip degree SP=Mi is set in step 136a. The slip degree SP=Mi indicates that the degree of slip of the road surface traveled by the automobile is less slippery than the worst case degree of slip represented by the slip degree SP=Hi.

When the judgment in the above step 135a is NO, a slip degree SP=Lo is set in step 137a. Here, the degree of slip SP=Lo shows that the road surface currently run by the automobile is a best case degree, i.e., not slippery. Further, stability of the automobile while running the road surface and the influence on the riding comfort (ride sensation) are stepwise reduced as the slip degree SP changes from SP=Hi, to SP=Mi and to SP=Lo.

When the slip degree setting routine 130a is terminated, the damping level determination routine 140a (see Fig. 19) is executed. In the execution of this damping level determination routine 140a, it is judged in step 141 whether or not the flag F is F=1. If the flag F is F=0 corner control is not being executed. Therefore, the determination (judgement) is NO in step 141. In the next step 142, it is judged whether or not the distance L, calculated as in step 142 (see Fig. 10) described in connection with the first embodiment, is less than the above predetermined distance.

If this distance L is not less than the above predetermined distance, the determination is NO in step 142. In step 143a, the damping level Cn=2 is determined for normal running of the automobile. On the other hand, when the judgment in step 142 is YES, the distance L is less than the predetermined distance, accordingly, as in the first embodiment, the flag F is set to F=1 in step 144.

After step 144, a determination of a damping level Cn, common to the respective suspension devices S1 to S4, is made in step 145a.

First, the estimated transverse acceleration G is calculated by using formula I, on the basis of the vehicle speed V and the radius of curvature Ra of the corner T.

Next, the damping level Cn is determined as follows, using the estimated transverse acceleration G and the slip degree SP on the basis of map shape data of the following Table 2.

Table 2

| slip degree SP<br>estimated transverse acceleration G | SP=Hi | SP=Mi | SP=Lo |
|---|---|---|---|
| G3<G | Cn=5 | Cn=6 | Cn=7 |
| G2<G≤G3 | Cn=4 | Cn=5 | Cn=6 |
| G1<G≤G2 | Cn=3 | Cn=4 | Cn=5 |
| G≤G1 | Cn=2 | Cn=3 | Cn=4 |

Here, in the map shape data of this Table 2, the damping level Cn is specified by the relationship between the slip degree SP and the estimated transverse acceleration G. However, when the slip degree is set as SP=Hi, the damping level is determined as Cn=3 on the basis of the data of Table 2 when the estimated transverse acceleration G is greater than G1 and is G2 or less. Further, when the set degree of slip is SP=Mi, the damping level is determined as Cn=4 on the basis of the data of Table 2 when the estimated transverse acceleration G is greater than G1 and is G2 or less. Further, when the degree of slip SP=Lo is set, the damping level is determined to be Cn=5 when the estimated transverse acceleration G is greater than G1 and is G2 or less.

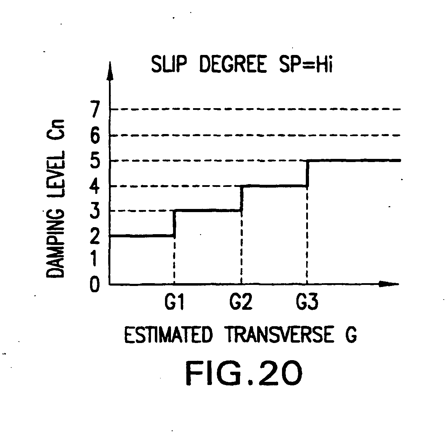

The relationship between the damping level Cn, the estimated transverse acceleration G and the degree of slip SP in the data of Table 2 will now be explained with reference to Figs. 20 to 22. In the relationship between the damping level Cn and the estimated transverse acceleration G, as shown in Figs. 20 to 22, the damping level Cn increases as the estimated transverse acceleration G increases.

Further, in the relationship between of the damping level Cn and the degree of slip SP, as shown in Figs. 20 to 22, the damping level Cn is reduced as the slip degree SP becomes worse in the order of SP=Lo, SP=Mi and SP=Hi. Namely, as the slip degree becomes worse, the damping level Cn is reduced.

When the damping level determination processing routine 140a proceeds to step 141, corner control is being executed if the flag F is F=1. Therefore, the judgment in step 141 is YES. Next, when the automobile has not started turning a corner, when the determination is NO in step 146, on the basis of the output of the steering sensor 42 as in the first embodiment, the determination of a damping level Cn common to the diaphragm apertures of all electromagnetic diaphragm valves 13 is made in step 145a as in the above case.

On the other hand, when the automobile has started turning a corner in step 146, the determination is YES. Next, a judgement is made in step 147 whether or not the automobile has completed turning the corner T as described in connection with the first embodiment, just after a judgement YES in step 146. Accordingly, similar to the first embodiment, the judgement is NO in the step 147.

In accordance with this judgment, the suspension control program proceeds to the last step of the damping level determination routine 140a without newly determining the damping level Cn in step 145a. This means that the damping level Cn already determined in the step 145a is held by also taking into consideration the degree of slip for the road surface immediately preceding the point (K) where the automobile starts turning the corner. This holding of the damping level Cn is maintained until the judgement becomes YES in step 147.

Thereafter, similar to the first embodiment, when the judgement becomes YES in step 147, i.e., when the automobile has completed turning the corner T, F=0 is set in step 148 similar to the case described in connection with the first embodiment. Next, similar to step 143a, the damping level Cn is determined as Cn=2 as a damping level for the normal running of the automobile in step 149a.

When the damping level determination routine 140a (see Figs. 17 and 19) is terminated, the diaphragm aperture of each electromagnetic diaphragm valve 13 is set in the next step 150 (see Fig. 17), in accordance with the results of one of the steps 143a, 145a, 147, 149a.

As mentioned above, when the damping level Cn is determined as Cn=2 in step 143a, the diaphragm aperture $\beta$ for each electromagnetic diaphragm valve 13 is set to $\beta$=5 on the basis of the damping level Cn=2 from the $\beta$-Cn characteristic graph of Fig. 15.

When the diaphragm aperture is determined as $\beta$=5 in this manner, data for $\beta$=5 is output to each of the driving circuits 60a to 60d in step 150 and the driving circuits 60a to 60d operate the respective electromagnetic diaphragm valves 13 on the basis of this data output to adjust the diaphragm apertures of all the electromagnetic diaphragm valves 13 to $\beta$=5.

When the diaphragm aperture is adjusted to $\beta$=5, the diaphragm aperture is a relatively large value, i.e., on a scale of $\beta$=1 to $\beta$=5. Therefore, in travel of the automobile in a straight line just before the entry into the turn around the corner T, the damping force of each of the suspension devices S1 to S4 is reduced, and riding comfort in straight running of the automobile can be maximized irrespective of the degree of slip of the road surface.

Further, when the damping level Cn is determined in step 145a after a judgement YES in step 142, the diaphragm aperture $\beta$ is determined in step 150 on the basis of the damping level Cn from the $\beta$-Cn characteristic graph of Fig. 15.

For example, when the slip degree is SP=Hi (see step 134a of Fig. 18) and the damping level is determined as Cn=3, since the estimated transverse G is greater than G1 and is G2 or less, the diaphragm aperture $\beta$ for each electromagnetic diaphragm valve 13 is determined as $\beta$=4, on the basis of the damping level Cn=3 from the $\beta$-Cn characteristic graph of Fig. 15, which corresponds to a worst case slip degree.

Further, when the slip degree is SP=Lo (see the step 137a of Fig. 18) and the damping level is determined as Cn=6 since the estimated transverse G is greater than G2 and is G3 or less, the diaphragm aperture $\beta$ of each electromagnetic diaphragm valve 13 is set as $\beta$=1, by applying the damping level Cn=6 to the $\beta$-Cn characteristic graph of Fig. 15, which corresponds to a least slippery road surface.

Next, data for the diaphragm aperture $\beta$ determined in this way is output to each of the driving circuits 60a to 60d in step 150 and the damping force of each of the suspension devices S1 to S4 is controlled on the basis of this output.

For example, when for the diaphragm aperture $\beta$=4 is output to each of the driving circuits 60a to 60d in step 150, the driving circuits 60a to 60d operate the respective electromagnetic diaphragm valves 13 so as to adjust the diaphragm apertures to $\beta$=4. When the diaphragm aperture $\beta$ is adjusted to $\beta$=4, the electromagnetic diaphragm valves 13 greatly reduce the damping force for each of the suspension devices S1 to S4.

Further, when data for a diaphragm aperture $\beta$=1 is output to each of the driving circuits 60a to 60d in step 150 as mentioned above, the driving circuits 60a to 60d operate the respective electromagnetic diaphragm valves 13 so as to adjust the diaphragm apertures to $\beta$=1. When the diaphragm aperture is adjusted to $\beta$=1 in this manner, the electromagnetic diaphragm valves 13 greatly increase the damping force of each of the suspension devices S1 to S4, similar to the above first embodiment.

In the straight running of the automobile until just before start of execution of the corner control, the damping force of each of the suspension devices S1 to S4 is controlled in consideration of the slip degree of the road surface.

When the diaphragm aperture is determined as β=4 as mentioned above, the damping force of each of the suspension devices S1 to S4 is reduced just before the automobile enters the turn around the corner T since the road surface has a high degree of slip, but ride comfort in straight running of the automobile can be maintained.

Further, when the diaphragm aperture is β=1, the damping force of each of the suspension devices S1 to S4 is greatly increased since the road surface is at the least slippery state. Thus, steering stability in turning the automobile at the corner T can be maximized.

Further, when the damping level Cn is determined in step 145a after a judgement NO in step 146, execution of corner control is started. Thereafter, in straight running, until just before the automobile enters into the turn around the corner T, the damping force of each of the suspension devices S1 to S4 is controlled by adjusting the diaphragm aperture β in step 150 after a determination of YES in step 142.

Further, when the judgement is NO in step 147, after a judgement YES in step 146, the damping level Cn already determined in step 145a, just before the judgement YES in step 146 is maintained. This means that the damping force of each of the suspension devices S1 to S4 is controlled taking into consideration the slip degree of the road surface just before entry of the automobile into the turn around the corner T and is held and utilized as the damping force after the entry of the automobile into the turn around the corner T, similar to the first embodiment.

Accordingly, when the automobile enters into the turn around the corner T, the operation of each of the suspension devices S1 to S4 is estimated and controlled so as to maintain the damping force already set, just before the entry of the automobile into the turn around the corner T. As a result, the stability and the riding comfort in the turning of the automobile around the corner T can be maximized even when the road surface at the corner T is slippery.

Further, when the damping level is Cn=2 in step 149, after a judgement YES in step 147, the diaphragm aperture of each electromagnetic diaphragm valve 13 is set to β=5 on the basis of application of the damping level Cn=2 to the β-Cn characteristic graph of Fig. 15, similar to the first embodiment.

When data for the diaphragm aperture β=5 is output to each of the driving circuits 60a to 60d, on the basis of this output data, the driving circuits 60a to 60d adjust all the diaphragm apertures of the respective electromagnetic diaphragm valves 13 to β=5.

When the diaphragm aperture is adjusted to β=5, the damping force of each of the suspension devices S1 to S4 is reduced for straight running of the automobile after having turned the corner T, similar to the above first embodiment, since the diaphragm aperture β is a large value. Thus, the riding comfort in straight running of the automobile can be maximized.

The present invention is not limited to the above embodiments; rather, various modifications may be made as follows:

(1) In judging the degree of irregularity of the road surface, a single acceleration sensor may be utilized instead of acceleration sensors 41a to 41d described in connection with the first embodiment. Further, in judging degree of irregularity of the road surface, a vehicle height sensor for detecting the height of the automobile and a stroke sensor for detecting the length of expansion of each suspension device may be utilized instead of the acceleration sensors 41a to 41d.

(2) Calculation of the estimated transverse acceleration G is not limited to use of Formula I, the deceleration correction coefficient Vr and the radius of curvature Ra. For example, an estimated transverse acceleration G may be obtained by subtracting a predetermined value from the vehicle speed V of the automobile (minus-correcting), squaring the remainder and dividing by the radius of curvature Ra.

(3) Judgment of the degree of slip of the road surface on which the automobile is traveling, is not limited to the calculation of the slip ratio from the rotational speed of a drive wheel of the automobile and the vehicle speed V, using the above formulas II and III. For example, the slip degree may be also judged by imaging of the road surface and/or by output of an ultrasonic sensor.

(4) Air suspension devices may be substituted for the suspension devices S1 to S4. Further, an active suspension device having the capability of adjusting the vehicle height may be adopted to control the posture of the automobile during the turning of the corner T.

(5) Determination of the radius of curvature Ra of the corner T, is not limited to the adoption of a minimum value of the curvature radii of all nodes N included in the corner. Instead, an average value at a number of points of smaller values for the radius of curvature may be adopted as the radius of curvature Ra of the corner.

(6) The present invention is not limited to a sedan type automobile, but may be applied in general to any vehicle. For example, the present invention may also be applied to a station wagon, a minivan or an electric railcar.

(7) The diaphragm aperture of each electromagnetic diaphragm valve 13 may also be adjusted on the basis of mutually independent damping levels instead of making the adjustment on the basis of a common damping level.

(8) The damping force of the suspension device estimated in advance before entry of the automobile into the turn around the corner T may also be controlled responsive to a combination of determination of the degree of irregularity and a determination of the degree of slip, instead of being limited to one determination or the other.

(9) The judgment in step 146, need not be based on output of the steering sensor 42. The output of a gyro sensor 41 e may be utilized instead.

(10) The estimated transverse acceleration G may be also calculated by using node angle (corresponding to a turning angle 2) instead of the radius of curvature Ra.
Both embodiments as described above can be combined with each other.

(11) The present invention is not limited to a suspension control system for an automobile, but also includes a suspension control method for an automobile.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.
In the following further embodiments of the invention are described with the reference numerals within the parentheses denote a corresponding relationship with the various means of the corresponding figures.
In an embodiment the inventive vehicular suspension control system for a vehicle equipped with a navigation system which control system includes:

suspension means (S1 - S4) interposed between a wheel support element (R1, R2) and the frame (B) of the vehicle, for providing a damping force;
roughness state detecting means for detecting a degree of roughness of a road surface traveled by the vehicle;
vehicle-speed detecting means (30c) for detecting speed of the vehicle;
cornering detecting means (42) for detecting cornering by the vehicle;
entrance determining means (145b, 146) for determining entrance of the vehicle into a turn around corner (T) in accordance with the determination of the cornering detecting means;
good-road adjustment calculating means (132, 133 - 137, 142, 143b, 147b, 143a, 147a) for, when the vehicle approaches the corner and the degree of roughness detected by the roughness detecting means corresponds to a good road surface, calculating a good-road adjustment of damping force of the suspension means on the basis of the detected degree of roughness, detected vehicle speed and corner information regarding the corner from the navigation system;
bad-road adjustment calculating means (132, 133 - 137, 142, 143b, 145a) for, responsive to approach of the vehicle to the corner and a degree of roughness state detected by the roughness detecting means which does not correspond to a good road surface, and, if the vehicle is determined to have entered the turn around the corner, calculating a bad-road adjustment of damping force of the suspension means on the basis of the detected degree of roughness, the detected vehicle speed and corner information regarding the corner from the navigation system; and
output means (150, 60a - 60d) for outputting to the suspension means the good-road adjustment calculated by the good-road adjustment calculating means or the bad-road adjustment calculated by the bad-road adjustment calculating means.

Thus, when the vehicle approaches a corner, if the degree of roughness of the road surface corresponds to a good road surface, a good-road adjustment is calculated on a basis of a good road surface, the detected vehicle speed and the corner information, and is output to the suspension means. On the other hand, if the degree of roughness of the road surface does not correspond to a good road surface, a bad-road adjustment is calculated on a basis of the detected degree of roughness, the detected vehicle speed and the corner information determined as the vehicle enters the turn at the corner, and is output to the suspension means.

Accordingly, when the vehicle approaches the corner, if the road surface has a degree of roughness corresponding to a good road surface, the damping force of the suspension means before entering the turn at the corner is controlled in a manner corresponding to a good-road adjustment, thus favorably maintaining steering stability of the vehicle in turning the corner. On the other hand, if the degree of roughness of the road surface where the vehicle approaches the corner does not corresponding to a good road surface, the damping force of the suspension means is controlled in a manner corresponding to the bad-road adjustment when entering the corner, thus, in this case also, favorably maintaining steering stability and riding comfort of the vehicle in turning the corner.

In cornering if, upon entering the turn around the corner, after detection of a good road surface in the approach to a corner and output of a good road adjustment, the detected degree of roughness no longer corresponds to a good road surface, a bad-road adjustment to the damping force of the suspension means is calculated as above and output to the suspension means. Accordingly, when the vehicle approaches a corner, in the case where the road surface changes from a degree of roughness corresponding to a good road surface to a degree of roughness not corresponding to a good road surface, the damping force of the suspension means is thereafter controlled in accordance with the bad-road adjustment amount so that, in travel around the corner, steering stability and riding comfort are maintained.

Instead of bad-road adjustment calculating means (132, 133 - 137, 142, 143b, 145a) the control system of the present invention may utilize normal travel adjustment calculating means (132, 133 - 137, 142, 143b, 147b, 142a, 148a) for, when the detected degree of roughness no longer corresponds to a good road surface, calculating a normal travel adjustment for damping force of the suspension means on the basis of the detected degree of roughness. The normal travel adjustment means may calculate the normal travel adjustment on the basis of either the detected degree of roughness alone or on the basis of the detected degree of roughness in combination with other detected condition or conditions.

If, in turning a corner, the detected degree of roughness changes from that which has the suspension means controlled in accordance with a bad-road adjustment or with a normal-travel adjustment to that corresponding to a good road surface state, at that point a good-road adjustment is calculated as above on the basis of the detected degree of roughness, the detected vehicle speed and the corner information, and is output to the suspension means. Accordingly, when the vehicle approaches a corner, in the case that the road surface changes from a degree of roughness not corresponding to a good road surface to a degree of roughness corresponding to a good road surface, the damping force of the suspension means is controlled in a manner corresponding to a good-road adjustment amount.

In another embodiment, the vehicular suspension control system of the present invention includes:

> suspension means (S1 - S4) interposed between a wheel support member (R1, R2) and the frame of the vehicle to provide a damping force;
> roughness state detecting means (41 a - 41 d) for detecting a degree of roughness of the road surface traveled by the vehicle;
> vehicle-speed detecting means (30c) for detecting vehicle speed (V);
> cornering detecting means (42) for detecting cornering of the vehicle;
> entrance determining means (145b, 146) for determining whether or not the vehicle has entered a turn around a corner (T) in accordance with output of the cornering detecting means;
> normal-travel adjustment calculating means (132, 133 - 137, 142, 143b, 147b, 142a, 148a) for, when the vehicle approaches a corner and the degree of roughness detected by the roughness state detecting means does not correspond to a good road surface, calculating a normal-travel adjustment for damping force of the suspension means on the basis of the detected degree of roughness; and
> bad-road adjustment calculating means (132, 133 - 137, 142, 143b, 145a) for, when the detected degree of roughness remains other than that of a good road surface upon entry of the vehicle into the turn around the corner, calculating a bad-road adjustment amount for damping force of the suspension means on the basis of the detected degree of roughness, the detected vehicle speed and corner information regarding the corner from the navigation system; and
> output means (150, 60a - 60d) for outputting to the suspension means a normal-travel adjustment calculated by the normal-travel adjustment calculating means or a bad-road adjustment calculated by the bad-road adjustment calculating means.

Accordingly, upon entry of the vehicle into the turn around the corner, when the detected degree of roughness remains at a level or levels not corresponding to a good road surface, the damping force of the suspension means is changed from that corresponding to the normal-travel adjustment to that corresponding to a bad-road adjustment.

The above embodiment may also include the previously described good-road adjustment calculating means.

Optionally, one or all of the adjustment calculating means may extract a roughness state component at a predetermined frequency from the signal for degree of roughness output by the roughness state detecting means and calculate the adjustment for damping force of the suspension means on the basis of that roughness state component.

In yet another embodiment, the vehicular suspension control system of the present invention is installed in a vehicle also equipped with a navigation system and includes:

suspension means (S1 - S4) interposed between a wheel support member (R1, R2) and the frame (B) of the vehicle to provide a damping force;
slip state detecting means (41a - 41d) for detecting slip state of a road surface traveled by the vehicle;
vehicle-speed detecting means (30c) for detecting vehicle speed;
cornering detecting means (42) for detecting cornering of the vehicle;
entrance determining means (145b, 146) for determining whether or not the vehicle has entered into a turn around the corner (T) based on output of the cornering detecting means;
good-road adjustment calculating means (132, 133 - 137, 142, 143d, 147d, 143c, 147c) for, when the vehicle approaches the corner, in the case where the slip state detected by the slip state detecting means corresponds to a good road surface, calculating a good-road adjustment for damping force of the suspension means on the basis of the detected slip state, the detected vehicle speed and corner information regarding the corner from the navigation system;
bad-road adjustment calculating means (132, 133 - 137, 142, 143d, 145c) for, when the vehicle approaches the corner and the slip state detected by the slip state detecting means does not correspond to that of a good road surface, upon entrance of the vehicle into the turn around the corner calculating a bad-road adjustment for damping force of the suspension means on the basis of the detected slip state, the detected vehicle speed and corner information regarding the corner from the navigation system; and
output means (150, 60a - 60d) for outputting to the suspension means the good-road adjustment calculated by the good-road adjustment calculating means or the bad-road adjustment calculated by the bad-road adjustment calculating means.

Thus, in this latter embodiment, when the vehicle approaches the corner, if the slip state of the road surface corresponds to a good road surface, a good-road adjustment is calculated on the basis of the detected slip state corresponding to the good road surface, the detected vehicle speed and the corner information, and is output to the suspension means. On the other hand, if the slip state of the road surface does not correspond to a good road surface, a bad-road adjustment is calculated on a basis of the detected slip, the detected vehicle speed and the corner information, responsive to a determination that the vehicle has entered the turn around the corner, and is output to the suspension means.

As the vehicle approaches the corner, if the slip state of the road surface changes from a slip state corresponding to a good road surface to a slip state not corresponding to a good road surface, the damping force of the suspension means is changed from that for a good road surface to that for a bad road surface when entering the corner. Thus, in travel around the corner, the vehicle maintains favorable stability.

Those embodiments including a slip state detecting means, instead of the bad-road adjustment means, may have a normal-travel adjustment amount calculating means (132, 133 - 137, 142, 143, 147d, 142b, 148b) for, in the case where the slip state detected by the slip state detecting means does not correspond to a good road surface, calculating a normal-travel adjustment for damping force of the suspension means on the basis of the detected slip state. In such an embodiment, when the vehicle approaches a corner during travel, the detected slip state may initially correspond to that of a good road surface, with control in accordance with an adjustment calculated on the basis of the detected slip state, the detected vehicle speed and the corner information. However, if the slip state of the road surface thereafter changes so that it no longer corresponds to that of a good road surface, a normal-travel adjustment is calculated for the damping force of the suspension means on the basis of the detected slip state, and is output to the suspension means.

Conversely, when the vehicle approaches the corner, in the case where the slip state of the road surface initially does not correspond to that of a good road surface with control in accordance with the normal-travel adjustment calculated on the basis of the detected slip state, alone, or in combination with other detected conditions, and thereafter, the slip state of the road surface changes to correspond to that of a good road surface, a good-road adjustment is calculated for the damping force on the basis of the detected slip state, the detected vehicle speed and the corner information, and is output to the suspension means.

In another embodiment, the vehicular suspension control system of the present invention is installed in a vehicle also equipped with a navigation system and includes:

suspension means (S1 - S4) interposed between a wheel support member (R1, R2) and the frame(B) of the vehicle to provide a damping force;
slip state detecting means (41a - 41d) for detecting a slip state of a road surface traveled by the vehicle;
vehicle-speed detecting means (30c) for detecting vehicle speed (V);
cornering detecting means (42) for detecting cornering of the vehicle;
entrance determining means (145, 146) for determining whether or not the vehicle has entered into a turn around the corner (T) based on output of the cornering detecting means;

normal-travel adjustment calculating means (132, 133 - 137, 142, 143, 147d, 142b, 148b) for, when the vehicle approaches the corner, in the case where the slip state detected by the slip state detecting means does not correspond to a good road surface, calculating a normal-travel adjustment for damping force of the suspension means on the basis of the detected slip state;

bad-road adjustment amount calculating means (132, 133 - 137, 142, 143d, 145c) for, when the slip state detected by the slip state detecting means continues to not correspond to that of a good road surface upon entry of the vehicle into the turn around the corner, calculating a bad-road adjustment amount for damping force of the suspension means on the basis of the detected slip state, the detected vehicle speed and corner information regarding the corner from the navigation system; and

output means (150, 60a - 60d) for outputting to the suspension means a normal-travel adjustment amount calculated by the normal-travel adjustment calculating means or a bad-road adjustment calculated by the bad-road adjustment calculating means.

Accordingly, upon entry of the vehicle into the turn around the corner, in the case that the traveling road surface maintains a slip state which does not correspond to a good road surface, the damping force of the suspension means is changed to that corresponding to a bad-road adjustment from the normal-travel adjustment.

In the embodiment utilizing slip state detection means, each of the adjustment calculating means may determine a degree of slip at a predetermined frequency from the slip state detected by the slip state detecting means and calculate the adjustment amount for damping on the basis of the determined degree of slip.

In another aspect, the present invention provides a method for control of suspension means in a vehicle equipped with a navigation system, which method includes:

detecting current position of the vehicle;

detecting vehicle speed;

detecting a degree of roughness of the road surface at the detected current position of the vehicle as the vehicle approaches a corner, as corresponding to either a good road surface or a bad road surface;

in approaching a corner, responsive to detection of a degree of roughness corresponding to a good road surface, calculating a good-road adjustment based on the detected degree of roughness, the detected vehicle speed and corner information regarding the corner from the navigation system;

determining entrance of the vehicle into a turn around the corner;

calculating a bad-road adjustment on the basis of the detected degree of roughness, the detected vehicle speed and the corner information responsive to detection of a degree of roughness corresponding to a bad road surface and determination of entrance of the vehicle into the turn around the corner; and

outputting to suspension means of the vehicle the good-road adjustment or the bad-road adjustment; and

controlling damping force of the suspension means in accordance with the output adjustment.

In this manner, the suspension means is controlled in accordance with the good-road adjustment or the bad-road adjustment, both of which are calculated on the basis of the detected degree of roughness, the detected vehicle speed and the corner information.

When the vehicle approaches a corner, in the case that the detected degree of roughness changes from one corresponding to a good-road surface state to a degree of roughness not corresponding to a good-road surface state, the damping force of the suspension means is controlled in a manner corresponding to bad-road adjustment when entering the turn around the corner.

Another embodiment of the method of the present invention includes:

detecting current position of the vehicle;

detecting vehicle speed;

detecting a degree of roughness of the road surface at the current position of the vehicle as the vehicle approaches a corner, as corresponding to either a good road surface or a normal road surface;

in approaching a corner, responsive to detection of a degree of roughness of road surface at the current position corresponding to a good road surface, upon entry of the vehicle into the turn around the corner calculating a good-road adjustment on the basis of the detected degree of roughness, the detected vehicle speed and corner information from the navigation system;

calculating a normal-travel adjustment, responsive to detection of a degree of roughness no longer corresponding to a good road surface, on the basis of the detected degree of roughness;

outputting to the suspension means the good-road adjustment amount or the normal-travel adjustment; and

controlling damping force of the suspension means of the vehicle in accordance with the output adjustment.

In this latter embodiment, when the vehicle approaches a corner, in the case that the road surface changes from a degree of roughness corresponding to a good-road surface state to one no longer corresponding to a good-road surface, the damping force of the suspension means is changed from control in accordance with the good-road adjustment to control in accordance with the normal-travel adjustment.

Conversely, when the vehicle approaches a corner with suspension control in accordance with the normal-travel adjustment, if the degree of roughness of the road surface changes from a state which does not correspond to a good-road surface state to one which does correspond to a good-road surface, control of the damping force of the suspension means is changed to control in accordance with the good-road adjustment.

In yet another embodiment, the control method combines the calculating and utilization of the normal-travel adjustment with calculating and utilization of the bad-road adjustment, optionally also with calculating and utilization of the good-road adjustment.

In yet another embodiment the vehicular suspension control method of the present invention includes:

detecting current position of the vehicle;

detecting vehicle speed;

detecting a slip state of the road surface at the detected current position as either a good-road state or a bad-road state;

in approaching a corner, responsive to detection of a slip state of the road surface at a current position which corresponds to a good road surface, calculating a good-road adjustment on the basis of the detected slip state, the detected vehicle speed and corner information from the navigation system;

determining whether or not the vehicle has entered a turn around the corner;

as the vehicle approaches the corner, responsive to detection of a slip state at the current position of the vehicle which does not correspond to a good road surface, upon entry of the vehicle into the turn around the corner, calculating a bad-road adjustment on the basis of the detected slip state, the detected vehicle speed and the corner information of from the navigation system; and

outputting to the suspension means the good-road adjustment or the bad-road adjustment; and

controlling the suspension means in accordance with the output adjustment.

In approaching a corner, when the detected slip state changes from a slip state corresponding to a good-road surface to a slip state which no longer corresponds to a good-road surface, control of the damping force of the suspension means is changed from that in accordance with the good-road adjustment to that in accordance with the bad-road adjustment.

The calculation of a normal-travel adjustment for a detected slip state which does not correspond to a good road surface, based on the detected slip state may be included in the foregoing embodiment of the method or may be substituted for either the good-road adjustment calculation or the bad-road adjustment amount calculation.

In the following a further embodiment of a damping level determination routine will be described instead of Fig. 10 to Figs. 24 and 25.

When the degree of roughness setting routine 130 is completed, a damping-level determination routine 140 (Fig. 8, Figs. 24 and 25) is executed. In the execution of the damping-level determination routine 140, it is determined at step 141 whether or not the flag F is set as F = 1. A flag F = 1 means that the microprocessor 50 is executing cornering control while a flag F = 0 means that the microprocessor 50 is not currently executing cornering control.

When the flag F is set as F = 0 in step 141, cornering control is not being executed, and the determination in step 141 is NO. In the next step 142, a current position X of the automobile is obtained from the computer 30f of the navigation system N, based on output of the GPS sensor 30a. The distance L from the detected current position X of the automobile to the curve starting point K is calculated and a determination is made as to whether or not the calculated distance L is less than a predetermined distance. If the calculated distance L is not less than the predetermined distance, the determination in step 142 is NO.

**[0156]** In step 142a, damping level Cn is determined to be Cn = 2 which represents the normal travel damping level of the automobile. Here, the damping level Cn is a level common for the aperture openings of the electromagnetic reduction valves 13 and which corresponds to the damping force of the suspension unit S 1 - S4.

On the other hand, in the case that the distance L is less than the predetermined distance, the determination in step 142 is YES. In the next step 143b, it is determined whether or not the degree of roughness P is P = Lo. If the degree of roughness is P = Lo (see step 137 in Fig. 9), the roughness of the road surface the automobile is traveling is the most moderate case. Accordingly, the determination is YES in step 143b. Then, in step 143a, determination of damping-level Cn which is common to the suspension units S 1 - S4 is executed.

At first, estimated lateral G is calculated on the basis of the vehicle speed V and the radius of curvature Ra of a corner T, by use of the following Equation I. Incidentally, estimated lateral G is a horizontal estimated acceleration that the automobile will undergo upon turning the corner T.

## I. Estimated lateral $G = \{(V \times Vr)2\} / Ra$

Vr in the Equation I represents a deceleration-correcting coefficient. The deceleration-correcting coefficient Vr is an assumed correction coefficient for correcting deceleration from a vehicle speed V at the current position X to vehicle speed of the automobile in travel around the corner T. In the present embodiment, it is set at Vr = 0.8 - 0.9, for example. Incidentally, the Equation I is stored in the ROM of the microprocessor 50.

The damping level Cn at a setting of a degree of roughness P = Lo (see step 137 in Fig. 9) is determined by use of estimated lateral G as follows, on the basis of a predetermined relationship (data map) shown in Table 1 below.

Table 3

| Estimated Lateral G | Damping Level Cn |
|---|---|
| G3<G | Cn=7 |
| G2<G≤G3 | Cn = 6 |
| G1<G≤G2 | Cn = 5 |
| G≤G1 | Cn=4 |

In the data map of Table 3, the damping level Cn for the case of a degree of roughness P = Lo is specified in relationship to an estimated lateral G set to increase in the order of G = 1, to G = 2, to G = 3. The data of Table 1 is prestored in the ROM of the microprocessor 50, together with the data map of table 2 referred to later.

Then, for example, when the estimated lateral G is greater than G1 and equal to or smaller than G2, the damping level is determined to be Cn = 5 on the basis of the data of Table 3.

The damping level Cn increases with increase in estimated lateral G, as shown in Fig. 12. Further, as the speed V of the automobile turning the corner becomes higher and as the radius of curvature Ra of the corner T becomes smaller, the estimated lateral G becomes greater.

When a damping level Cn common to the suspension units S 1 - S4 is determined in step 143a as described above, the flag F is set as F = 1 in the next step 144.

The determination in step 143b is NO unless the degree of roughness is P = Lo. Then, when the steering sensor 42 indicates approximately the neutral position, the automobile has not commenced cornering. Accordingly, the determination is NO in step 145b. Due to this, the damping level Cn is determined as Cn = 2 in step 142a as the normal damping level of the automobile, similar to the above.

In step 145b, when the automobile has commenced cornering, the determination is YES, on the basis of the signal output by the steering sensor 42. Then, in step 145a, a process of determining a damping level Cn common to the suspension units S1 - S4, is executed as follows.

First, an estimated lateral G is calculated on the basis of vehicle speed V of the automobile and radius of curvature Ra of the corner T, by use of the foregoing Equation I. Damping level Cn is determined by use of an estimated lateral G and the degree of roughness P, as follows, on the basis of the data map shown in Table 4 below.

Table 4

| Roughness Degree P / Estimated Lateral G | P = Hi | P=Mi |
|---|---|---|
| G3<G | Cn=5 | Cn=6 |
| G2<G≤G3 | Cn=4 | Cn=5 |
| G1<G≤G2 | Cn=3 | Cn=4 |
| G≤G1 | Cn=2 | Cn=3 |

In this data map of Table 4, damping level Cn is specified in relation to degree of roughness P and estimated lateral G.

For example, when the degree of roughness P = Hi (see step 134 in Fig. 9), when the estimated lateral G is greater than G1 and equal to or less than G2, the damping level is determined to be Cn = 3 on the basis of the data map of Table 4. When the degree of roughness is P = Mi (see step 136 in Fig. 9), when the estimated lateral G is greater than G1 and equal to or less than G2, the damping level is set as Cn = 4 on the basis of the data map of Table 4.

In the relationship between damping level Cn, estimated lateral G, and degree of roughness P in the data map of Table 4, damping level Cn is specified to increase with increase in the estimated lateral G, as shown in Figs. 3 and 14. The damping level Cn is specified to decrease as the degree of roughness P worsens, e.g. P = Mi to P = Hi, as shown in Figs. 13 and 14. This means that, as the average acceleration component increases, the degree of roughness deteriorates and the damping level Cn decreases.

After determining a damping level Cn common to the suspension units S1 - S4 in step 145a as above, the flag F is set as F = 1 in the next step 144.

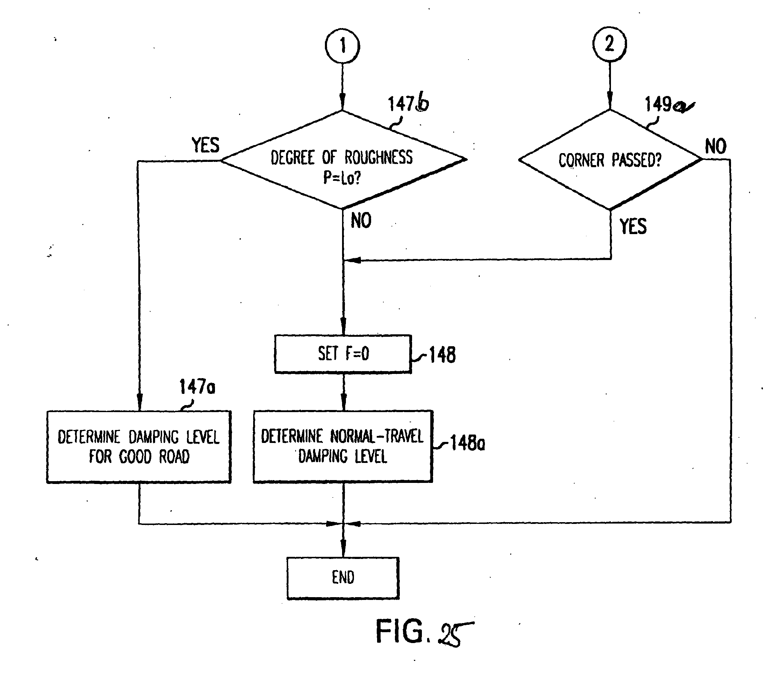

If the flag F is F = 1 when execution of the damping-level determination routine 140 reaches step 141, the cornering control is in effect and hence, the determination is YES in step 141. Then, when the steering sensor 42 has an output representing approximately the neutral position, the automobile has not yet commenced cornering and, hence, the determination is NO in step 146. Then, in step 147b of Fig. 25, it is determined whether or not the degree of roughness is P = Lo.

When the degree of roughness is P = Lo (see step 137 of Fig. 9), the determination is YES in step 147b. In the next step 147a, a damping level Cn common to the suspension units S1 - S4 is determined by applying an estimated lateral G to the data map of Table 3, similar to step 143a.

On the other hand, when the degree of roughness is not P = Lo, the determination is NO in step 147b and the flag is set as F = 0 in step 148. Then, the damping level is determined in step 148a as Cn = 2 for normal travel of the automobile, similar to step 142a.

Meanwhile, when the damping-level determination routine 140 reaches step 146, if the automobile has commenced cornering, the determination is YES on the basis of the output of the steering sensor 42. Then, in step 149a of Fig. 25, it is determined whether or not the automobile has passed the corner T. Immediately after the determination YES in step 146, a determination NO is made in step 149a on the basis of output of gyro sensor 30b from the computer 30f.

In accordance with previous determinations, the suspension control program proceeds to the end of the damping-level determination routine 140 without determining a new damping level Cn. This means maintaining the damping level Cn which had been previously determined by taking into account the road surface degree of roughness immediately after the automobile has commenced cornering (see determination YES at step 145b) or immediately before it commenced cornering (see determination YES in step 147b). The damping level Cn is then held until a determination of YES in step 149a.

Thereafter, when the automobile completes turning the corner T, a determination YES is made in step 149a, on the basis of output of the gyro sensor 30b from the computer 30f, thus setting the flag as F = 0 in the next step 148. Then, in step 148a, a damping level Cn is set as Cn = 2 for normal travel of the automobile, similar to step 142a.

When the execution of the damping-level determination routine 140 (see Figs. 8, 24 and 25) has been completed, an aperture opening is output in the next step 150 (see Fig. 8). In step 150, the electromagnetic reduction valves 13 of the suspension units S1 - S4 have their apertures adjusted in accordance with the damping level determined in step 142a (or 148a), 143a (or 147a) or 145a or by NO in step 149a.

In the case where the determination is NO in step 142, because the distance L of the automobile to the corner T is not smaller than the predetermined value, and damping level Cn is set as Cn = 2 in step 142a (see Fig. 33), the aperture opening $\beta$ of the electromagnetic reduction valve 13 of each suspension unit S1 - S4 is adjusted to $\beta$ =5 in step 150 on the basis of the damping level Cn = 2, and the relationship between aperture opening $\beta$ and damping level Cn shown in Fig. 16. In this first embodiment, the diaphragm aperture opening $\beta$ increases with a decrease of damping level Cn, as shown in Fig. 15.

In the case where the aperture opening $\beta$ is determined as $\beta$ = 5, the aperture opening $\beta$ in step 150 is output as data for $\beta$ = 5 to the drive circuits 60a - 60d. Responsive to this output, the drive circuits 60a - 60d adjust the apertures of the electromagnetic reduction valves 13 to $\beta$ = 5.

By adjustment of the aperture openings to as high as $\beta$ = 5, each electromagnetic reduction valve 13 greatly increases the amount of flow of operating oil between the hydraulic chambers 12a, 12b, thereby greatly reducing the resistance to flow of operating oil. In this manner, when the automobile is traveling straight at a point further from the corner T than the predetermined value, the damping force of the suspension unit S 1 - S4 is made smaller with emphasis on driving comfort, in a manner suited for the normal travel of the automobile.

When the distance L of the automobile to the corner T becomes smaller than the predetermined value (YES in step 142), the determination is YES in step 143b on the basis of degree of roughness P = Lo (see step 137 in Fig. 9), and after the damping level Cn has been determined in step 143a, the aperture opening degree $\beta$ is determined in step 150, based on the damping level Cn from the Cn - $\beta$ graph (data map) of Fig. 15, as follows.

For example, in the case where the damping level Cn is determined as Cn = 6, based on an estimated lateral G greater than G2 but equal to or smaller than G3, the aperture opening degree of $\beta$ of each electromagnetic reduction valve 13 is set as $\beta$ = 1 in step 150 based on application of the damping level to the $\beta$-Cn graph of Fig. 15.

The aperture opening β thus determined is output as data in step 150 to the drive circuits 60a - 60d. Based on the output, the damping force of each suspension unit S 1 - S4 is controlled as follows.

For example, where the aperture opening is output as data representative of β = 1 to the drive circuits 60a - 60d in step 150, the drive circuits 60a - 60d adjust the electromagnetic reduction valves 13 to reduce their aperture openings to β = 1, whereby the electromagnetic reduction valves 13 greatly reduce the amount of flow of operating oil between the hydraulic chambers 12a, 12b by greatly increasing the resistance to flow of operating oil, thereby greatly increasing the damping force of each suspension unit S1 - S4.

By thus adjusting the damping force of the suspension units S1 - S4 during straight travel after the distance L to the corner T has become less than the predetermined distance, it is possible to control the adjustment with emphasis placed on steering stability in cornering, immediately before the automobile enters the turn around the corner. Moreover, because the road surface has the most moderate degree of roughness, i.e., P = Lo (see step 137 in Fig. 9), the automobile is comfortable to drive in straight travel after the distance L to the corner T has become less than the predetermined distance.

If the flag is set as F = 1 in step 144 after the process of step 143a, in the next control cycle the determination will be YES in step 141, leading a determination in step 146. However, because the automobile is in traveling straight in the present stage, the determination is NO in step 146, based on output of gyro sensor 30b from the computer 30f.

At this time, in the case where the most recently detected degree of roughness P is P = Lo in step 137, the damping level Cn is determined in step 147a on the basis of a procedure similar to that of step 143a. Accordingly, even in further straight travel of the automobile after the distance L to the corner T has become less than the predetermined distance, the damping force of each suspension unit S1 - S4 can be changed to place more emphasis on steering stability immediately before entering the turn around the corner. Moreover, because the road surface is at the most moderate degree of roughness, the automobile is comfortable to drive during straight travel after the distance L to the corner T has become less than the predetermined distance.

In such straight travel of the automobile, when the most current degree of roughness P changes to P = Hi (see step 134 in Fig. 9) or P = Mi (see step 136 in Fig. 9), the determination becomes NO in step 147b and thereafter the flag is set as F = 0 in step 148. Then, by the process at step 148a, similar to the process of the step 142a, the damping level Cn is set in step 148a as damping level for normal travel, i.e., Cn = 2.

Meanwhile, in the case where the distance L of the automobile to the corner T has become less than the predetermined value (YES in step 142) and the determination NO is made in step 143b because the degree of roughness is not P = Lo, if the determination is NO in step 145b, the damping level Cn is set as Cn = 2 in step 142a and the damping force of each suspension unit S 1 - S4 in straight travel immediately before entering the turn around corner T is controlled in a manner similar to that of control of the damping force by adjusting the aperture opening β at step 150 after a determination of NO in step 142.

On the other hand, when the determination is YES in step 145b on the basis of a detection output of gyro sensor 30b from the computer 30f during straight travel of the automobile and the damping level Cn is determined in step 145a as above, the aperture opening degree β is determined in step 150 from the β-Cn relationship of Fig. 15, based on the damping level Cn and premised on the flag set as F = 1 in step 144.

In the case where the degree of roughness is P = Hi (see step 134 in Fig. 9) and the estimated lateral G is greater than G1 but equal to or smaller than G2 and hence the damping level is determined to be Cn = 3, the aperture opening β of each electromagnetic reduction valve 13 is set as β = 4 by applying the damping level to the β-Cn data map of Fig. 15. This corresponds to that setting β for a road surface having the worst degree of roughness.

The aperture opening β thus determined is output as data in step 150 to the drive circuits 60a - 60d. Based on the output data, the damping force of each suspension unit S1 - S4 is controlled as follows.

For example, in the case where the aperture opening β is output as data representative of β = 4 to the drive circuits 60a - 60d as above (step 150), the drive circuits 60a - 60d adjust the aperture openings of the electromagnetic reduction valves 13 to β = 4, whereby the electromagnetic reduction valves 13 greatly increase the flow of operating oil between the hydraulic chambers 12a, 12b, greatly reduce the resistance to flow of operating oil, and greatly decrease the damping force of the suspension unit S1 - S4.

In this manner, even if the degree of roughness P of road surface is P = Hi (see step 134 in Fig. 9) or P = Mi (see step 136 in Fig. 9), the damping force of the suspension units S1 - S4 is adjusted during straight travel of the automobile and is thereby under control immediately upon commencing cornering (see YES in step 145b), whereby the damping force of the suspension units S1 - S4 is controlled in accordance with a determined damping level (determined aperture opening β) in step 145a.

In other words, in cornering of the automobile (a determination of YES in step 145b), the damping force of the suspension units S1 - S4 is controlled by adjusting the aperture openings to β = 4, based on information about the corner and the worst degree of roughness of the road surface. Accordingly, the automobile is assured steering stability and riding comfort, immediately upon commencing cornering.

As in the foregoing, after a determination of YES in step 141 due to setting of the flag as F = 1 in step 144, the automobile further travels straight (a determination of NO in step 146). When the automobile commences cornering, there is a determination of YES in step 146 on the basis of output of gyro sensor 30b from the computer 30f. The determination routine of step 149a is then initiated and, when the determination in step 149a is NO, the damping level Cn which has already been determined in step 143a (or 147a) or 145a is maintained. In other words, in the case of a determination NO in step 149a after a determination YES in step 146, the most currently determined damping level Cn, i.e. the damping level Cn immediately before entering the turn at the corner T, is maintained as determined in step 143a or 145a in a previously executed cycle.

Thus, a suitable damping force for each suspension unit S1 - S4 is predicted and set in advance, taking into consideration the degree of roughness of the road surface as detected immediately before or immediately after entering the turn at the corner T of the automobile, in order to hold and utilize that damping force during cornering at the corner T by the automobile.

Accordingly, when the automobile is traveling around the corner T, the suspension units S1 - S4 are controlled with a damping force previously set immediately before or immediately after entering the turn at corner T. As a result, even if the road surface at the corner T is rough, it is possible to favorably maintain steering stability and riding comfort during cornering around the corner T.

In the following a further embodiment of a damping level determination process routine will be described:

When the slip-degree setting routine 130a is completed , the damping-level determination process routine 140a (see Figs. 17, 26 and 27) is executed. In executing the damping-level determination routine 140a, it is determined in step 141 whether or not the flag F is F = 1.

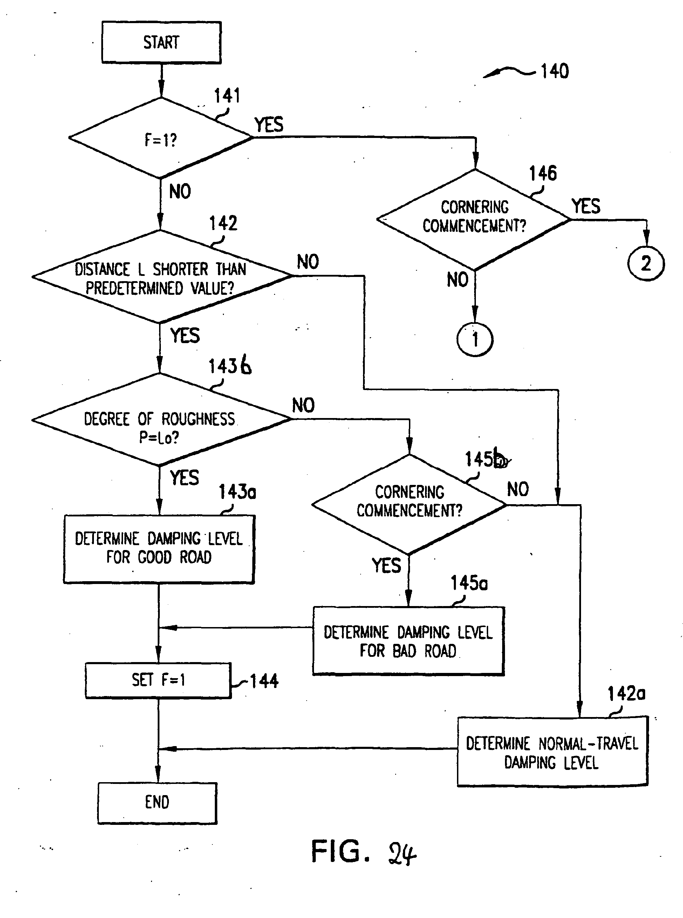

If the flag F is F = 0 in step 141, cornering control is not being executed and hence the determination is NO. In the next step 142, it is determined whether or not the distance L, calculated in a manner similar to step 142 (see Fig. 24) is less than the predetermined distance.

In the case where the distance L is not less than the predetermined distance, the determination is NO in step 142. In step 142b, the damping level Cn is determined to be Cn = 2, i.e., the normal travel damping level of the automobile.

The determination in step 142 becomes YES when the distance L becomes less than the predetermined distance. Hence, in step 143b, it is determined whether or not the foregoing degree of slip is SP = Lo.

When the degree of slip is SP = Lo (see step 137a in Fig. 18) in step 143d, the road surface the automobile is traveling is least slippery. In step 143c, determination of a damping level Cn common to the suspension units S 1 - S4 is executed as follows.

First, an estimated lateral G is calculated based on the speed V of the automobile and the radius of curvature Ra of the corner T, by use of the foregoing Equation 1.

Then, when the degree of slip is SP = Lo (see step 137a in Fig. 18), the damping level Cn is determined as follows based on a data map as represented by Table 5 below, by use of the estimated lateral G.

Table 5

| Estimated Lateral G | Damping Level Cn |
|---|---|
| G3<G | Cn=7 |
| G2<G≤G3 | Cn=6 |
| G1<G≤G2 | Cn=5 |
| G≤G1 | Cn=4 |

In the data map of Table 5, the damping level Cn for a degree of slip is SP = Lo is specified in relation to an estimated lateral G. Thus, for example, when the estimated lateral G is greater than G1 and equal to or smaller than G2, the damping level is set as Cn = 5 based on the data map of Table 5. The data map of Table 5 may be prestored in the ROM of the microprocessor 50, together with the data map of Table 6 below.

In the relationship between damping level Cn and estimated lateral G of Table 5, damping level Cn increases with increasing estimated lateral G as shown in Fig. 20.

After determining a damping level Cn common to the suspension units S1 - S4 in step 143c as above, the flag F is set as F = 1 in step 144.

If the degree of slip is not SP = Lo in the foregoing step 143d, the determination is NO. At the present stage, when the output of the steering sensor 42 represents approximately the neutral position, the automobile has not commenced cornering and hence the determination is NO in step 145. Due to this, in step 142b, the damping level Cn is determined to be Cn = 2, i.e., the normal travel damping level of the automobile, as previously described.

In the foregoing step 145, if the automobile has commenced cornering, the determination is YES based on the output of the steering sensor 42. Then, in step 145c, a determination of a damping level Cn common to the suspension units S 1 - S4 is executed as follows.

First, an estimated lateral G is calculated based on the speed V of the automobile and the radius of curvature Ra of the corner T, by use of the foregoing Equation I. Damping level Cn is determined based on the data map shown in Table 6 below, by use of the estimated lateral G and the foregoing degree of slip SP, as follows.

Table 6

| Degree of Slip P<br>Estimated Lateral G | SP = Hi | SP = Mi |
|---|---|---|
| G3<G | Cn=5 | Cn=6 |
| G2<G≤G3 | Cn=4 | Cn=5 |
| G1<G≤G2 | Cn=3 | Cn=4 |
| G≤G1 | Cn=2 | Cn=3 |

In the data map of Table 6, damping level Cn is specified in relationship with degree of slip SP and estimated lateral G.

Thus, when the degree of slip is SP = Hi (see step 134a in Fig. 18) as above, if the estimated lateral G is greater than G1 and equal to or smaller than G2, the damping level is determined to be Cn = 3 on the basis of the data map of Table 6. In the case that the degree of slip is SP = Mi (see step 136a in Fig. 18), if the estimated lateral G is greater than G1 and equal to or smaller than G2, the damping level is determined to be Cn = 4 on the basis of the data map of Table 6.

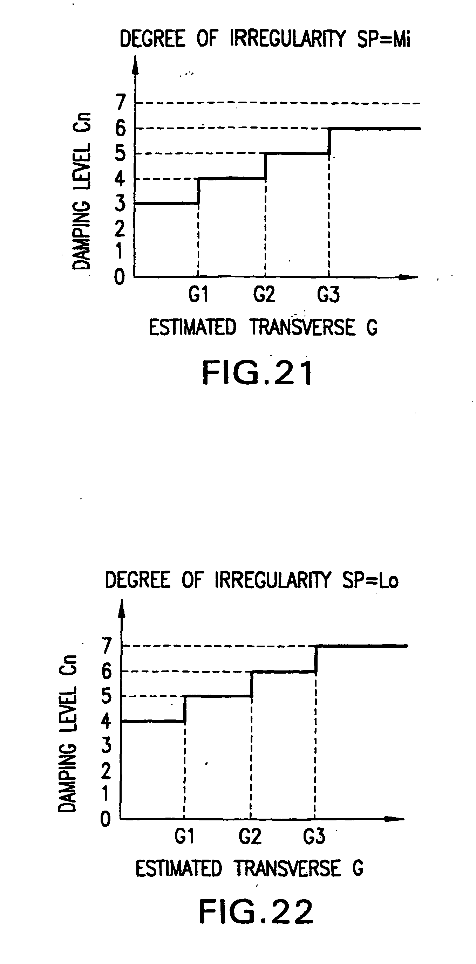

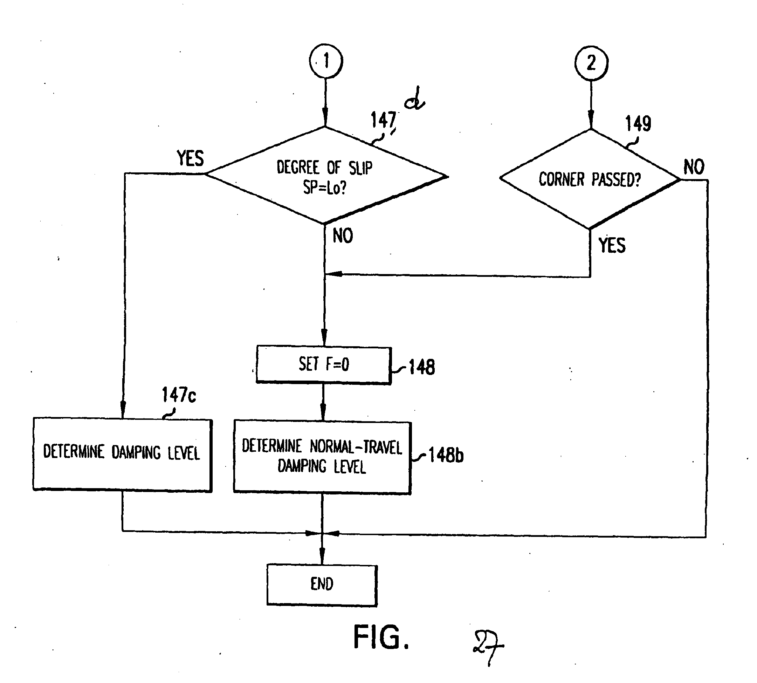

In the relationship between damping level Cn, estimated lateral G and degree of slip SP of Table 6, damping level Cn increases with increasing estimated lateral G in the relationship between a damping level Cn and an estimated lateral G, as shown in Figs. 21 and 27. In the relationship between damping level Cn and degree of slip SP, the damping level Cn decreases as the degree of slip SP changes from SP = Mi to SP = Hi, as shown in Figs. 21 and 22. This means that damping level Cn decreases as degree of slip worsens.

After a damping level Cn is determined which is common to the suspension units S 1 - S4 in step 145c as above, the flag F is set as F = 1 at the next step 144, similar to the first embodiment.

If the flag is F = 1 when the damping-level determination routine 140a reaches step 141, cornering control is being executed and hence the determination is YES in step 141. Then, at the present stage, when the output of the steering sensor 42 represents an approximately (nearly) neutral position, the automobile has not yet commenced cornering and hence the determination is NO in step 146. Then, in step 147d of Fig. 27, it is determined whether or not the degree of slip SP is SP = Lo.

In the case where the degree of slip is SP = Lo (see step 137a of Fig. 18), the determination is YES in step 147d. In the next step 147c, a damping level Cn common to the suspension units S1 - S4 is determined by using an estimated lateral G on the basis of the data map of Table 5, similar to step 143c.

On the other hand, when the degree of slip is not SP = Lo, the determination is NO in step 147d and the flag is set as F = 0 in step 148. Then, the damping level Cn is determined in step 148b to be Cn = 2 for the normal travel of the automobile, similar to step 142b.

When the damping-level determination routine 140a reaches step 146, if the automobile has commenced cornering, the determination is YES based on output of the steering sensor 42. Then, in step 149 of Fig. 27, it is determined whether or not the automobile has passed the corner T, similar to the first embodiment. Immediately after a determination of YES in step 146, the determination NO is made in step 149, similar to the first embodiment, on the basis of output of gyro sensor 30b from the computer 30f.

The suspension control program proceeds to the end step of the damping-level determination routine 140a without newly determining a damping level Cn. This means maintaining the damping level Cn which has been determined taking into account the road surface degree of slip immediately after the automobile has commenced cornering (see YES in step 145) or immediately before it has commenced the cornering (see YES in step 147d). This holding of the same damping level Cn is maintained until a determination YES is made in step 149.

Thereafter, when the automobile completes the turn around the corner T, the determination becomes YES in step 149, similar to the first embodiment. In step 148, the flag is set as F = 0 as in the first embodiment. Then, in step 148b, the damping level Cn is determined as Cn = 2, i.e., the normal traveling damping level of the automobile, similar to step 142b.

When execution of the damping-level determination routine 140a (see Figs. 17, 26 and 27) is completed, an aperture setting process is executed in the next step 150 (see Fig. 17). In this process, the degree of opening of the aperture of the electromagnetic reduction valve 13 of each suspension unit S1 - S4 is determined by the process of damping level determination in the foregoing step 142b (or 148b), 143c (or 147c) or 145c or in step 149 with a determination of NO, as follows.

In the case where the determination is NO in step 142 because the distance L of the automobile to the corner T is not smaller than the predetermined value and the damping level Cn is determined Cn = 2 in step 142b (see Fig. 43), a target degree of opening $\beta$ of the electromagnetic reduction valve 13 of each suspension unit S1 - S4 is determined to be $\beta$ = 5 in step 150 on the basis of the damping level Cn = 2, from the $\beta$-Cn graph of Fig. 15.

In case that the degree of opening $\beta$ is determined as $\beta$ = 5 as above, data representative of $\beta$ = 5 is output to the drive circuits 60a - 60d. Based on this output data, each drive circuit 60a - 60d drives the electromagnetic reduction valve 13 to adjust the aperture of each relevant electromagnetic reduction valve 13 to $\beta$= 5.

Because of a high degree of opening at $\beta$ = 5, the damping force of each suspension unit S 1 - S4 is decreased so as to emphasize behavior stability suited for normal travel, when the automobile is traveling straight at a point further from the corner T than the predetermined value.

When the distance L of the automobile to the corner T becomes smaller than the predetermined value (YES in step 142), where the determination YES has been made in step 143d on the basis of a degree of slip SP = Lo (see step 137a in Fig. 18) and thereafter the damping level Cn is determined in step 143c, the degree of opening $\beta$ is determined based on the damping level Cn in step 150 from the $\beta$- Cn relationship of Fig. 15, as follows.

For example, in the case where the damping level is determined as Cn = 6 because estimated lateral G is greater than G2 but equal to or smaller than G3, the degree of opening degree $\beta$ of each electromagnetic reduction valve 13 is determined as $\beta$ =1 in step 150 based on the relevant damping level from the $\beta$-Cn relationship of Fig. 15.

The degree of opening $\beta$ thus determined is output as data in step 150 to the drive circuits 60a - 60d. Based on this output data, the damping force of each suspension unit S1 - S4 is controlled as follows.

For example, in case that the aperture data output at step 150 is representative of $\beta$ = 1, the drive circuits 60a - 60d drive the electromagnetic valves 13, to adjust their aperture openings to $\beta$ = 1. In response, electromagnetic reduction valves 13 greatly increase the damping forces of the suspension unit S1 - S4, similar to the first embodiment.

By thus controlling the damping force of the suspension units S1 - S4 for straight travel of the automobile after the distance L to the corner T becomes less than the predetermined distance, control is changed to place emphasis on steering stability in cornering immediately before the automobile enters the turn around the corner. Moreover, because the road surface is in the least slidable state (least slippery state), as specified by slip degree SP = Lo (see step 137a in Fig. 9), the automobile has good stability during straight travel after the distance L to the corner T becomes less than the predetermined distance.

If the flag is set to F = 1 in step 144 after step 143c, the determination becomes YES in the next execution of step 141. However, because the automobile is traveling straight at the present stage, the determination is NO in step 146, based on output of gyro sensor 30b, similar to the first embodiment.

When the most current degree of roughness SP is SP = Lo in step 137a, damping level Cn is determined in step 147c in a manner similar to the determination in step 143c. Accordingly, even in straight travel of the automobile after the distance L to the corner T has become less than the predetermined distance, control of the damping force of each suspension unit S1 - S4 can be changed to place emphasis on steering stability in cornering immediately before entering the turn around the corner. Moreover, because the road surface is in the least slidable state, the automobile has good stability during straight travel of the automobile after the distance L to the corner T becomes less than the predetermined distance.

In such straight travel of the automobile, when the most current degree of slip SP changes to SP = Hi (see step 134a in Fig. 18) or SP = Mi (see step 136a in Fig. 18), the determination is NO in step 147 and thereafter the flag is set as F = 0 in step 148, similar to the first embodiment. Then, by execution of step 148b, similar to execution of step 142b, damping level Cn is determined as a normal travel damping level Cn = 2. Accordingly, based on the damping level Cn = 2, the damping force of each suspension unit S 1 - S4 is controlled similarly to the above.

If the distance L of the automobile to the corner T has become less than the predetermined value (YES in step 142) and the determination is NO in step 143d, because the degree of slip degree is not SP = Lo, so that the determination is NO in step 145 and damping level Cn is determined as Cn = 2 in step 142b, the damping force of each suspension unit S1 - S4 in straight travel of the automobile immediately before entering the turn around the corner T is controlled in a manner similar to control of the damping force by adjusting the aperture opening degree $\beta$ in step 150 after a NO determination in step 142 as above.

If the determination is YES in step 145, based on output of gyro sensor 30b from the computer 30f during straight travel of the automobile and thereafter damping level Cn is determined in step 145c as above, the aperture opening $\beta$ is determined in step 150 from the $\beta$-Cn relationship of Fig. 15 based on the damping level Cn with the flag set as F = 1 in step 144.

For example, in the case where the degree of slip is SP = Hi (see step 134a in Fig. 18) and estimated lateral G is greater than G1 and equal to or smaller than G2, and hence damping level is determined to be Cn = 3, the aperture opening $\beta$ of each electromagnetic reduction valve 13 is determined to be $\beta$ = 4 from the $\beta$-Cn relationship of Fig. 15.

Such a determination corresponds to a road surface of the worst slip degree.

The aperture opening β thus determined is output as data in step 150 to the drive circuits 60a - 60d. Based on this output data, the damping force of each suspension unit S1 - S4 is controlled as below.

For example, when the aperture opening β is output as data representative of β = 4 to the drive circuits 60a - 60d in step 150 as above, the drive circuits 60a - 60d respectively drive the electromagnetic reduction valves 13, to adjust the aperture opening β of the electromagnetic reduction valves 13 to β = 4.

In this manner, even if the degree of slip SP of the road surface is SP = Hi (see step 134a in Fig. 17) or SP = Mi (see step 136a in Fig. 17), the damping force of the suspension units S1 - S4 is controlled immediately after commencing cornering of the automobile (see determination YES in step 145), whereby the damping force of each suspension unit S1 - S4 is controlled in accordance with the damping level (aperture opening degree β) determined in step 145b.

In other words, immediately after commencing cornering of the automobile, due to a YES determination in step 145, the damping force of each suspension unit S1 - S4 is controlled based on an aperture opening β = 4, matched to the corner information and the degree of slip. Accordingly, the automobile is imparted with stability suited for cornering, immediately after commencing cornering.

As in the foregoing, after a YES determination in step 141, due to setting of the flag to F = 1 in step 144, the automobile travels further straight on the basis of a NO determination in step 146, during which time the automobile commences cornering whereby the determination changes to YES in step 146, based on output of gyro sensor 30b from the computer 30f, and then the routine goes to step 149. Then, when the determination in step 149 is NO as in the foregoing, the damping level Cn previously determined in step 143c (or 147c) or 145c is maintained.

In other words, in the case of a NO determination in step 149, after a YES determination in step 146, following execution of steps 143d, 143c and 144, the most currently determined damping level Cn, i.e. the damping level Cn immediately before entering the turn at the corner T, is maintained in step 143c.

In the case of a NO determination in step 149 after a YES determination in step 146, following execution of steps 143d, 145, 145c and 144, the most recently determined damping level Cn, i.e. the damping level Cn immediately after entering the turn at corner T, is maintained in step 145c.

Thus, the damping force of each suspension unit S1 - S4 is predicted and controlled in advance, taking into consideration the degree of slip of the road surface immediately before or immediately after entering the turn at the corner T, which damping force is held and utilized throughout cornering at the corner T.

Accordingly, as the automobile is traveling around the corner T, the suspension units S1 - S4 are controlled with a damping force previously set immediately before or immediately after entering the turn at the corner T. As a result, even if there is a slip in the road surface at the corner T, it is possible to maintain stability in turning the corner T.

The present invention allows for various modifications of the foregoing embodiments.

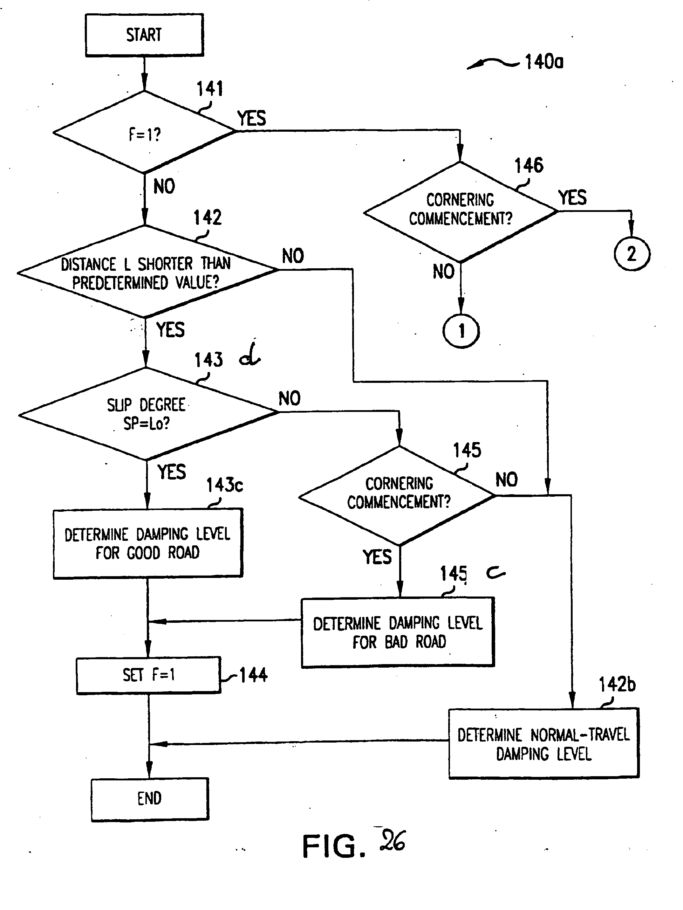

(1) Step 142 (see Figs. 24 and 26) may employ a method based on a difference between (1) the time, estimated from vehicle speed V, required for the automobile to travel from a current position X to a curve starting point K as above and (2) a time predetermined to be sufficient for cornering control, in place of the previously described method based on a difference between a distance L and a predetermined distance.

(2) In determining a degree of roughness of the road surface, a single acceleration sensor may be employed in place of the acceleration sensors 41a - 41d of the first embodiment. Alternatively, degree of roughness of the road surface may be determined utilizing a vehicle height sensor for detecting height of the automobile or a stroke sensor for detecting length of expansion/contraction of each suspension unit, instead of the acceleration sensors 41a - 41d.

(3) Instead of calculating an estimated lateral G based on vehicle speed V, a deceleration correcting coefficient Vr and a radius of curvature Ra, by means of the foregoing Equation I, an estimated lateral G may be calculated by squaring a remainder obtained by subtracting a predetermined value (correction) from the vehicle speed V of the automobile and then dividing by a radius of curvature Ra.

(4) Determination of a degree of slip for a road surface the automobile is traveling is not limited to calculating a slip ratio from a driving-wheel rotation speed and speed V of the vehicle by means of the foregoing Equation II and Equation III. Instead, a slip ratio for the road surface may be determined by imaging the road surface or by use of an ultrasonic sensor.

(5) In place of the suspension units S1 - S4, air suspension units may be employed, for example. Active suspension units may be employed which can adjust the vehicle height in order to position-control the automobile even during travel around the corner T.

(6) The radius of curvature Ra of the corner T is not limited to the minimum value of radii of curvature of all the nodes N included in the corner but instead may be a mean value of several points smaller in radius of curvature.

(7) The vehicle to which the present invention is applicable may be a a sedan automobile, a wagon, a microbus or a tram.

(8) The electromagnetic valves 13 may have their aperture openings individually adjusted based on mutually independent damping levels instead of a common damping level.

(9) The damping force of the suspension unit preset before entering a turn around a corner T may be based on a combination of detected degree of roughness and a detected slip state, without limitation to one or the other.

(10) The criteria utilized in step 145 and step 146 is not limited to output of the steering sensor 42 but may be, instead, output of a gyro sensor 30b, for example.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A suspension control system for a vehicle equipped with a navigational device, said suspension control system comprising:

   a plurality of suspension devices (S1-S4), each mounted between a suspension arm and a body portion of the vehicle, in association with a wheel of the vehicle, each of said suspension devices expanding and contracting in accordance with a damping force to damp forces on the vehicle received from a road surface traveled by the vehicle;
   detecting means (41a-41d; 43a, 43b) for detecting a road surface condition;
   vehicle speed detecting means (30b) for detecting vehicle speed;
   calculating means (50) for calculating an adjustment value corresponding to the damping force on the basis of the detected vehicle speed, the detected road surface condition and information relative to a corner in the road surface received from the navigation device when the vehicle approaches the corner; and
   output means (60a-60d) for outputting the adjustment value to a suspension device so as to control the damping force of the suspension device.

2. The suspension control system for a vehicle according to claim 1, wherein the suspension control system further comprises:

   turn detecting means (30c) for detecting turning of the vehicle; and
   entry judging means (N) for judging whether or not the vehicle has entered into a turn around corner on the basis of the turning of the vehicle detected by said turning detecting means; and
   wherein said output means (60a-60d) outputs said adjustment value to the suspension devices (S1-S4) so as to control the damping forces in accordance with the adjustment value responsive to a judgment by said entry judging means that the vehicle has entered into the turn around the corner.

3. The suspension control system for a vehicle according to claim 2, wherein said calculating means (50) stops the calculation of the adjustment value in accordance with a judgment by said entry judging means (N) that the vehicle has entered into a turn around said corner, and wherein the adjustment value last calculated before stopping the calculation is used to control the damping force of said suspension devices in travel of the vehicle around the corner.

4. The suspension control system for a vehicle according to claim 3, wherein the adjustment value last calculated before stopping the calculation is maintained until the vehicle has passed through the corner.

5. The suspension control system for a vehicle according to any of claims 1 to 4, wherein said detecting means (41a-41c) detects a degree of irregularity of the road surface.

6. The suspension control system for a vehicle according to claim 5, wherein said calculating means (50) extracts an irregularity component corresponding to a predetermined frequency from the degree of irregularity detected by said detecting means, and calculates the adjustment value corresponding to the damping force of said suspension means on the basis of the irregularity component.

7. A suspension control system for a vehicle equipped with a navigational device according to any of claims 1 to 4, wherein said detecting means (43a, 43b) detects a slip state of the road surface.

8. A suspension control method for cornering of a vehicle equipped with a navigation device and with wheel suspension devices, said suspension control method comprising:

   detecting present position of the vehicle;
   detecting approach of the vehicle to a corner;
   detecting road surface condition at the detected present position;
   obtaining information for the corner from the navigation device;
   calculating an adjustment value corresponding to damping force of the suspension devices on the basis of both the detected road surface condition and the information for the corner obtained from the navigation device; and
   controlling the damping force of the suspension devices in accordance with the calculated adjustment value.

9. A suspension control method for cornering of a vehicle equipped with a navigation device and with wheel suspension devices, according to claim 8, wherein:

   a degree of irregularity of the road surface is detected as a road surface condition; and
   said adjustment value corresponding to damping force of the suspension devices is calculated on the basis of the detected vehicle speed, the detected degree of irregularity of the road surface, and the information for the corner obtained from the navigation device.

10. A suspension control method for cornering of a vehicle equipped with a navigation device and with wheel suspension devices, according to claim 8, wherein:

   a slip state of the road surface is detected as a road surface condition; and
   said adjustment value corresponding to damping force of the suspension devices is calculated on the basis of the detected vehicle speed, the detected slip state of the road surface, and the information for said corner obtained from the navigation device.


**Patentansprüche**

1. Aufhängungssteuersystem für ein mit einer Navigationsvorrichtung ausgestattetes Fahrzeug, wobei das Aufhängungssteuersystem enthält:

   eine Mehrzahl an Aufhängungsvorrichtungen (S1-S4), die jeweils zwischen einem Aufhängungsarm und einem Aufbaubereich des Fahrzeugs befestigt sind, in Verbindung mit einem Rad des Fahrzeugs, wobei sich jede der Aufhängungsvorrichtungen entsprechend einer Dämpfungskraft entspannt und kontrahiert, um Kräfte auf das Fahrzeug zu dämpfen, die von einer Oberfläche einer Straße her empfangen werden, auf der das Fahrzeug fährt; Erfassungsmittel (41a-41d; 43a, 43b) zum Erfassen eines Straßenoberflächenzustandes;
   Fahrzeuggeschwindigkeitserfassungsmittel (30b) zum Erfassen einer Fahrzeuggeschwindigkeit;
   Berechnungsmittel (50) zum Berechnen eines Einstellwerts, der der Dämpfungskraft entspricht, auf der Basis der ermittelten Fahrzeuggeschwindigkeit, des ermittelten Straßenoberflächenzustandes und von Informationen betreffend eine Kurve in der Straßenoberfläche, die von der Navigationsvorrichtung erhalten werden, wenn sich das Fahrzeug der Kurve nähert; und
   Ausgabemittel (60a-60d) zum Ausgeben des Einstellwerts an eine Aufhängungsvorrichtung, um die Dämpfungskraft der Aufhängungsvorrichtung zu steuern.

2. Aufhängungssteuersystem für ein Fahrzeug, nach Anspruch 1, wobei das Aufhängungssteuersystem weiter enthält:

Drehungserfassungsmittel (30c) zum Erfassen einer Drehung des Fahrzeugs; und
Eintrittsbeurteilungsmittel (N) zum Beurteilen ob das Fahrzeug in eine Kurve eingefahren ist, auf der Basis der Drehung des Fahrzeugs, die durch das Drehungserfassungsmittel ermittelt wurde; und
wobei das Ausgabemittel (60a-60d) den Einstellwert an die Aufhängungsvorrichtungen (S1-S4) ausgibt, um die Dämpfungskräfte entsprechend dem Einstellwert zu steuern, in Reaktion auf eine Beurteilung durch das Eintrittsbeurteilungsmittel, dass das Fahrzeug in eine Kurve eingefahren ist.

3. Aufhängungssteuersystem für ein Fahrzeug, nach Anspruch 2, wobei das Berechnungsmittel (50) die Berechnung des Einstellwerts in Übereinstimmung mit einer Bewertung durch das Eintrittsbeurteilungsmittel (N), dass das Fahrzeug in eine Drehung um diese Kurve eingetreten ist, stoppt, und wobei der Einstellwert, der zuletzt vor Beendung der Berechnung berechnet wurde, dazu verwendet wird, die Dämpfungskraft der Aufhängungsvorrichtungen bei der Kurvenfahrt des Fahrzeugs zu steuern.

4. Aufhängungssteuersystem für ein Fahrzeug, nach Anspruch 3, wobei der Einstellwert, der zuletzt vor dem Beenden der Berechnung berechnet wurde, beibehalten wird, bis das Fahrzeug die Kurve passiert hat.

5. Aufhängungssteuersystem für ein Fahrzeug, nach einem der Ansprüche 1 bis 4, wobei das Erfassungsmittel (41 a-41 c) einen Grad der Unregelmäßigkeit der Straßenoberfläche ermittelt.

6. Aufhängungssteuersystem für ein Fahrzeug, nach Anspruch 5, wobei das Berechnungsmittel (50) eine Unregelmäßigkeitskomponente, die einer vorbestimmten Frequenz entspricht, aus dem Grad an Unregelmäßigkeit, die durch das Erfassungsmittel ermittelt wird, herleitet und den Einstellwert entsprechend der Dämpfungskraft der Aufhängungseinrichtung auf der Basis der Unregelmäßigkeitskomponente berechnet.

7. Aufhängungssteuersystem für ein Fahrzeug, das mit einer Navigationsvorrichtung ausgestattet ist, nach einem der Ansprüche 1 bis 4, wobei das Erfassungsmittel (43a, 43b) einen Rutschzustand der Straßenoberfläche ermittelt.

8. Aufhängungssteuerungsverfahren für die Kurvenfahrt eines Fahrzeugs, das mit einer Navigationsvorrichtung und mit Radaufhängungsvorrichtungen ausgestattet ist, wobei das Aufhängungssteuerungsverfahren enthält:

Ermitteln der gegenwärtigen Fahrzeugposition;
Ermitteln der Annäherung des Fahrzeugs an eine Kurve;
Ermitteln eines Straßenoberflächenzustandes an der ermittelten gegenwärtigen Position;
Erhalten von Kurveninformationen von der Navigationsvorrichtung;
Berechnen eines Einstellwerts, der der Dämpfungskraft der Aufhängungsvorrichtungen entspricht, auf der Basis sowohl des ermittelten Straßenoberflächenzustandes als auch der Kurveninformationen, die von der Navigationsvorrichtung erhalten wurde; und
Steuern der Dämpfungskraft der Aufhängungsvorrichtungen in Übereinstimmung mit dem berechneten Einstellwert.

9. Aufhängungssteuerungsverfahren für die Kurvenfahrt eines Fahrzeugs, das mit einer Navigationsvorrichtung und mit Radaufhängungsvorrichtungen ausgestattet ist, nach Anspruch 8, wobei:

ein Grad der Unregelmäßigkeit der Straßenoberfläche als ein Straßenoberflächenzustand ermittelt wird; und
der Einstellwert, der der Dämpfungskraft der Aufhängungsvorrichtung entspricht, auf der Basis der ermittelten Fahrzeuggeschwindigkeit, des ermittelten Rutschzustands der Straßenoberfläche und der Kurveninformationen, die von der Navigationsvorrichtung erhalten werden, berechnet wird.

10. Aufhängungssteuerungsverfahren für die Kurvenfahrt eines Fahrzeugs, das mit einer Navigationsvorrichtung und mit Radaufhängungsvorrichtungen versehen ist, nach Anspruch 8, wobei:

ein Rutschzustand der Straßenoberfläche als ein Straßenoberflächenzustand ermittelt wird; und
der Einstellwert, der einer Dämpfungskraft der Aufhängungsvorrichtungen entspricht, auf der Basis der ermittelten Fahrzeuggeschwindigkeit, des ermittelten Rutschzustands der Straßenoberfläche, und der Kurveninformationen, die von der Navigationsvorrichtung erhalten werden, berechnet wird.

**Revendications**

1. Système de commande de suspension pour un véhicule équipé d'un dispositif de navigation, ledit système de commande de suspension comprenant :

   une pluralité de dispositifs de suspension (S1 à S4), chacun étant monté entre un bras de suspension et une partie de carrosserie du véhicule, en association avec une roue du véhicule, chacun desdits dispositifs de suspension s'étendant et se contractant selon une force d'amortissement pour amortir les forces sur le véhicule reçues depuis une chaussée sur laquelle le véhicule se déplace ; un moyen de détection (41a à 41d ; 43a, 43b) pour détecter un état de chaussée ;
   un moyen de détection de la vitesse du véhicule (30b) pour détecter la vitesse du véhicule ;
   un moyen de calcul (50) pour calculer une valeur d'ajustement correspondant à la force d'amortissement sur la base de la vitesse détectée du véhicule, l'état détecté de la chaussée et les informations relatives à un virage dans la chaussée reçues en provenance du dispositif de navigation quand le véhicule s'approche du virage ; et
   un moyen de transmission (60a à 60d) pour transmettre la valeur d'ajustement à un dispositif de suspension de façon à commander la force d'amortissement du dispositif de suspension.

2. Système de commande de suspension pour un véhicule selon la revendication 1, dans lequel le système de commande de suspension comprend également :

   un moyen de détection de virage (30c) pour détecter le virage du véhicule ; et
   un moyen de jugement d'entrée (N) pour juger si le véhicule est entré ou pas dans un virage sur la base du virage du véhicule détecté par ledit moyen de détection de virage ; et
   dans lequel ledit moyen de transmission (60a à 60d) transmet ladite valeur d'ajustement aux dispositifs de suspension (S1 à S4) de façon à commander les forces d'amortissement selon la valeur d'ajustement en réaction à un jugement par ledit moyen de jugement d'entrée que le véhicule est entré dans le virage.

3. Système de commande de suspension pour un véhicule selon la revendication 2, dans lequel ledit moyen de calcul (50) arrête le calcul de la valeur d'ajustement selon un jugement par ledit moyen de jugement d'entrée (N) que le véhicule est entré dans un virage, et dans lequel la valeur d'ajustement dernièrement calculée avant l'arrêt du calcul est utilisée pour commander la force d'amortissement desdits dispositifs de suspension dans le déplacement du véhicule autour du virage.

4. Système de commande de suspension pour un véhicule selon la revendication 3, dans lequel la valeur d'ajustement dernièrement calculée avant l'arrêt du calcul est conservée jusqu'à ce que le véhicule ait dépassé le virage.

5. Système de commande de suspension pour un véhicule selon l'une quelconque des revendications 1 à 4, dans lequel ledit moyen de détection (41a à 41c) détecte un degré d'irrégularité de la chaussée.

6. Système de commande de suspension pour un véhicule selon la revendication 5, dans lequel ledit moyen de calcul (50) extrait un composant d'irrégularité correspondant à une fréquence prédéterminée à partir du degré d'irrégularité détecté par ledit moyen de détection, et calcule la valeur d'ajustement correspondant à la force d'amortissement dudit moyen de suspension sur la base du composant d'irrégularité.

7. Système de commande de suspension pour un véhicule équipé d'un dispositif de navigation selon l'une quelconque des revendications 1 à 4, dans lequel ledit moyen de détection (43a, 43b) détecte un état glissant de la chaussée.

8. Procédé de commande de suspension pour faire tourner un véhicule équipé d'un dispositif de navigation et de dispositifs de suspension de roue, ledit procédé de commande de suspension comprenant :

   la détection de la position actuelle du véhicule ;
   la détection de l'approche d'un virage par le véhicule ;
   la détection de l'état de la chaussée sur la position actuelle détectée ;
   l'obtention d'informations pour le virage à partir du dispositif de navigation ;
   le calcul d'une valeur d'ajustement correspondant à la force d'amortissement des dispositifs de suspension, à la fois sur la base de l'état détecté de la chaussée et des informations pour le virage obtenues à partir du dispositif de navigation ; et

la commande de la force d'amortissement des dispositifs de suspension selon la valeur d'ajustement calculée.

9.  Procédé de commande de suspension pour faire tourner un véhicule équipé d'un dispositif de navigation et de dispositifs de suspension de roue selon la revendication 8, dans lequel :

un degré d'irrégularité de la chaussée est détecté comme un état de la chaussée ; et
ladite valeur d'ajustement correspondant à la force d'amortissement des dispositifs de suspension est calculée sur la base de la vitesse détectée du véhicule, du degré d'irrégularité détecté de la chaussée, et des informations pour le virage obtenues à partir du dispositif de navigation.

10. Procédé de commande de suspension pour faire tourner un véhicule équipé d'un dispositif de navigation et de dispositifs de suspension de roue selon la revendication 8, dans lequel :

un état glissant de la chaussée est détecté comme un état de la chaussée ; et
ladite valeur d'ajustement correspondant à la force d'amortissement des dispositifs de suspension est calculée sur la base de la vitesse détectée du véhicule, de l'état glissant détecté de la chaussée, et des informations pour ledit virage obtenues à partir du dispositif de navigation.

S1 SUSPENSION DEVICE

S2 SUSPENSION DEVICE

S3 SUSPENSION DEVICE

S4 SUSPENSION DEVICE

60a DRIVING CIRCUIT

60b DRIVING CIRCUIT

60c DRIVING CIRCUIT

60d DRIVING CIRCUIT

E

MICROPROCESSOR

50

30g OUTPUT DEVICE

30e MEMORY DEVICE

30d INPUT DEVICE

N

COMPUTER

30a GPS SENSOR

30b VEHICLE SPEED SENSOR

30c GYRO SENSOR

30f

41a ACCELERATION SENSOR

41b ACCELERATION SENSOR

41c ACCELERATION SENSOR

41d ACCELERATION SENSOR

42 STEERING SENSOR

FIG.1

FIG.2

FIG.3

FIG.4

START

NAVIGATION BASIC ROUTINE ~100

RUNNING ENVIRONMENT RECOGNITION ROUTINE ~110

RUNNING ENVIRONMENT INFORMATION TRANSMISSION ~120

END

## FIG.5

START

100

DISPLAY REQUEST? 101

NO

YES

MAP DATA READING ROUTINE ~102

MAP DISPLAY ROUTINE ~103

ROUTE SEARCH ROUTINE ~104

ROUTE GUIDANCE ROUTINE ~105

END

## FIG.6

```
              ┌─────────────┐                    110
              │    START    │                  ╱
              └─────────────┘              ↙
                     │
    ┌────────────────────────────────────────────┐
    │   CURVE STARTING POINT JUDGEMENT ROUTINE    │──111
    └────────────────────────────────────────────┘
                     │
    ┌────────────────────────────────────────────┐
    │    RADIUS OF CURVATURE CALCULATING ROUTINE  │──112
    └────────────────────────────────────────────┘
                     │
              ┌─────────────┐
              │     END     │
              └─────────────┘
```

# FIG.7

```
              ┌─────────────┐
              │    START    │
              └─────────────┘
                     │
    ┌────────────────────────────────────────────┐
    │     DEGREE OF IRREGULARITY SETTING ROUTINE  │──130
    └────────────────────────────────────────────┘
                     │
    ┌────────────────────────────────────────────┐
    │     DAMPING LEVEL DETERMINATION ROUTINE     │──140
    └────────────────────────────────────────────┘
                     │
    ┌────────────────────────────────────────────┐
    │        DIAPHRAGM APERTURE OUTPUT            │──150
    └────────────────────────────────────────────┘
                     │
              ┌─────────────┐
              │     END     │
              └─────────────┘
```

# FIG.8

START

130

INPUT DETECTING SIGNAL OF
EACH ACCELERATION SENSOR — 131

FILTER PROCESSING ROUTINE — 132

IS AVERAGED
ACCELERATION
COMPONENT EQUAL TO FIRST
PREDETERMINED ACCELERATION
OR MORE?                    NO

133

YES

IS AVERAGED
ACCELERATION
COMPONENT EQUAL TO SECOND
PREDETERMINED ACCELERATION
OR MORE?                    NO

135

YES

DEGREE OF IRREGULARITY P=Mi

136

DEGREE OF IRREGULARITY P=Hi

134

DEGREE OF IRREGULARITY P=Lo

137

END

FIG.9

START

141 F=1? — YES → 146 IS TURNING SHAPE RUNNING STARTED? — YES → 147 PASS THROUGH CORNER? — YES → 148 SET F=0 → 149 DETERMINE DAMPING LEVEL FOR NORMAL RUNNING → END

141 F=1? — NO → 142 IS DISTANCE L LESS THAN PREDETERMINED VALUE? — YES → 144 SET F=1 → 145 DETERMINE DAMPING LEVEL → END

142 IS DISTANCE L LESS THAN PREDETERMINED VALUE? — NO → 143 DETERMINE DAMPING LEVEL FOR NORMAL RUNNING → END

146 IS TURNING SHAPE RUNNING STARTED? — NO → 145 DETERMINE DAMPING LEVEL

147 PASS THROUGH CORNER? — NO → 149 DETERMINE DAMPING LEVEL FOR NORMAL RUNNING

140

FIG.10

FIG.11

DEGREE OF IRREGULARITY P=Lo

FIG.12

DEGREE OF IRREGULARITY P=Mi

FIG.13

DEGREE OF IRREGULARITY P=Hi

FIG.14

FIG.15

FIG.16

EP 1 518 722 B1

START

SLIP DEGREE SETTING ROUTINE ~130a

DAMPING LEVEL DETERMINATION ROUTINE ~140a

DIAPHRAGM OPENING OUTPUT ROUTINE ~150

END

FIG.17

START

INPUT DETECTING OUTPUT OF
EACH ROTATIONAL SPEED SENSOR 131a

CALCULATE SLIP RATIO 132a

130a

IS SLIP RATIO
FIRST PREDETERMINED
SLIP RATIO OR MORE?
133a

NO

YES

IS SLIP RATIO SECOND
PREDETERMINED SLIP RATIO OR
MORE?
135a

NO

YES

SLIP DEGREE SP=Hi

134a

SLIP DEGREE SP=Mi

136a

SLIP DEGREE SP=Lo

137a

END

FIG.18

EP 1 518 722 B1

```
                         ┌──────────┐
                         │  START   │
                         └────┬─────┘
                              │                        ⌒ 140a
                            141│
                         ╱────┴────╲    YES
                        ╱  F=1 ?    ╲─────────────┐
                        ╲           ╱             │
                         ╲────┬────╱           146 │
                            NO │              ╱────┴────╲   YES
                              │             ╱ IS TURNING  ╲────────┐
                          142 │            ╱ SHAPE RUNNING ╲       │
               NO      ╱───────┴──────╲    ╲  STARTED?    ╱     147 │
          ┌──────────╱ IS DISTANCE L   ╲    ╲────┬──────╱     ╱────┴────╲
          │          ╲ LESS THAN        ╱      NO │    NO    ╱ PASS THROUGH╲
          │           ╲ PREDETERMINED  ╱         │    │      ╲  CORNER?    ╱
          │            ╲  VALUE?      ╱          │    │       ╲────┬─────╱
          │             ╲────┬──────╱           │    │          YES │
          │               YES │                 │    │              │
          │                   │                 │    │      ┌───────┴──────┐
          │          ┌────────┴─────┐           │    │      │  SET F=0     │─148
     143a │          │   SET F=1    │─144        │    │      └───────┬──────┘
     ┌────┴─────┐    └────────┬─────┘           │    │              │
     │DETERMINE │             │◄────────────────┘    │      ┌───────┴──────┐
     │DAMPING   │    ┌────────┴─────┐                │      │DETERMINE     │─149a
     │LEVEL FOR │    │DETERMINE     │─145a           │      │DAMPING LEVEL │
     │NORMAL    │    │DAMPING LEVEL │                │      │FOR NORMAL    │
     │RUNNING   │    └────────┬─────┘                │      │RUNNING       │
     └────┬─────┘             │                      │      └───────┬──────┘
          │                   │                      │              │
          └───────────────────┴──────────────────────┴──────────────┘
                              │
                         ┌────┴─────┐
                         │   END    │        FIG.19
                         └──────────┘
```

FIG.20

FIG.21

FIG.22

FIG.23

~140

START

141
F=1? —YES→

↓NO

142
DISTANCE L SHORTER THAN PREDETERMINED VALUE? —NO→

↓YES

146
CORNERING COMMENCEMENT? —YES→ (2)

↓NO

(1)

143b
DEGREE OF ROUGHNESS P=Lo? —NO→

↓YES

145b
CORNERING COMMENCEMENT? —NO→

↓YES

143a
DETERMINE DAMPING LEVEL FOR GOOD ROAD

145a
DETERMINE DAMPING LEVEL FOR BAD ROAD

142a
DETERMINE NORMAL-TRAVEL DAMPING LEVEL

SET F=1 ~144

END

FIG. 24

FIG. 25

EP 1 518 722 B1

START

141

F=1?  →YES

NO

146

CORNERING COMMENCEMENT?  →YES

NO

140a

②

142

DISTANCE L SHORTER THAN PREDETERMINED VALUE?  →NO

YES

①

143  d

SLIP DEGREE SP=Lo?  →NO

YES

145

CORNERING COMMENCEMENT?  →NO

143c

DETERMINE DAMPING LEVEL FOR GOOD ROAD

YES

145 c

DETERMINE DAMPING LEVEL FOR BAD ROAD

SET F=1  144

142b

DETERMINE NORMAL-TRAVEL DAMPING LEVEL

END

FIG. 26

EP 1 518 722 B1

① ② 

147 $d$ 149

YES
DEGREE OF SLIP
SP=Lo?
NO

CORNER PASSED?
NO

YES

SET F=0 ——148

147c

DETERMINE DAMPING LEVEL

DETERMINE NORMAL-TRAVEL
DAMPING LEVEL ——148b

END

FIG. 27

**EP 1 518 722 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9114367 A